# EUROPEAN PATENT APPLICATION

(11) **EP 4 851 240 A1**
(43) Date of publication of application: **09.12.2026**
(21) Application number: 24922038.5
(22) Date of filing: 16.12.2024
(51) Int. Cl.: C08L 7/00, B60C 1/00, C08L 9/00, C08L 101/00

(54) **RUBBER COMPOSITION FOR TIRE, TREAD RUBBER, AND TIRE**

(30) Priority: 30.01.2024 JP 2024012293
(71) Applicant: BRIDGESTONE CORPORATION, Chuo-ku Tokyo 104-8340 (JP)
(72) Inventor: OSHIMA Naoya, Tokyo 104-8340 (JP)
(74) Representative: Marks & Clerk LLP
(86) International application number: PCT/JP2024/044498
(87) International publication number: WO 2025/164120

(57) **Abstract**

With the aim of providing a rubber composition for a tire that is capable of improving the ratio of sustainable materials in a tire and, when considering the entire process of production, use, and disposal of synthetic rubber, is capable of promoting reduction of environmental impact, a rubber composition for a tire contains a rubber component (A) including isoprene skeleton rubber (A1) and synthetic rubber (A2), wherein the content of the isoprene skeleton rubber (A1) is 10 parts by mass to 90 parts by mass and the content of the synthetic rubber (A2) is 90 parts by mass to 10 parts by mass in 100 parts by mass of the rubber component (A), and the synthetic rubber (A2) includes synthetic rubber (A2-1) supplied according to a mass balance approach.

## Description

### TECHNICAL FIELD

The present disclosure relates to a rubber composition for a tire, tread rubber, and a tire.

### BACKGROUND

In general, various performances are required for tires, such as high fuel efficiency, wear resistance performance, fracture resistance performance, steering stability, and gripping performance on various road surfaces. In order to satisfy such requirements, various rubber compositions with different formulations are used for each member constituting the tire. For example, PTL 1 and PTL 2 below disclose rubber compositions for tire treads in which isoprene skeleton rubber such as natural rubber and polyisoprene, and synthetic rubber such as polybutadiene and styrene-butadiene rubber are blended, and further, fillers such as silica and carbon black, and resin are compounded.

### CITATION LIST

### (Patent Literature)

PTL 1: JP 2022-535367 A
PTL 2: JP 2022-535725 A

### SUMMARY

### (Technical Problem)

Meanwhile, in recent years, from the viewpoint of sustainability of society, it has been required to increase the ratio of so-called sustainable materials, such as materials derived from biological resources (biomass resources) and materials derived from recycled resources, also for each member constituting a tire.

However, among the materials blended in rubber compositions for tires, the use of sustainable materials for synthetic rubber has not been sufficiently studied so far, and it is necessary to promote reduction of environmental impact when considering the entire process of production, use, and disposal of synthetic rubber.

Therefore, the present disclosure has as its object to provide a rubber composition for a tire and tread rubber that are capable of increasing the ratio of sustainable materials in a tire and, when considering the entire process of production, use, and disposal of synthetic rubber, are capable of promoting reduction of environmental impact.

Further, the present disclosure has as a further object to provide a tire that is capable of promoting reduction of environmental impact when considering the entire process of production, use, and disposal of synthetic rubber, and in which the ratio of sustainable materials is increased.

### (Solution to Problem)

The gist configuration of the rubber composition for a tire, tread rubber, and tire of the present disclosure that solves the above problems is as follows.
[1] A rubber composition for a tire comprising a rubber component (A) including isoprene skeleton rubber (A1) and synthetic rubber (A2), wherein
   content of the isoprene skeleton rubber (A1) is 10 parts by mass to 90 parts by mass and content of the synthetic rubber (A2) is 90 parts by mass to 10 parts by mass in 100 parts by mass of the rubber component (A), and
   the synthetic rubber (A2) includes synthetic rubber (A2-1) supplied according to a mass balance approach.
[2] The rubber composition for a tire according to [1], wherein the synthetic rubber (A2) includes synthetic rubber derived from at least one type of plant-derived raw material, plant-derived by-product, raw material obtained by recycling a plant-derived material, or raw material obtained by recycling a fossil resource-derived material.
[3] The rubber composition for a tire according to [1] or [2], wherein the synthetic rubber (A2) includes 0.1 mass% to 99 mass% of synthetic rubber derived from a biological resource and 99.9 mass% to 1 mass% of synthetic rubber derived from a fossil resource.
[4] The rubber composition for a tire according to any one of [1] to [3], further comprising a resin (B).
[5] The rubber composition for a tire according to [4], wherein content of the resin (B) is 1 part by mass to 50 parts by mass with respect to 100 parts by mass of the rubber component (A).
[6] Tread rubber comprising the rubber composition for a tire according to any one of [1] to [5].
[7] A tire comprising the tread rubber according to [6].

### (Advantageous Effect)

According to the present disclosure, it is possible to provide a rubber composition for a tire and tread rubber that are capable of increasing the ratio of sustainable materials in a tire and, when considering the entire process of production, use, and disposal of synthetic rubber, are capable of promoting reduction of environmental impact.

Further, according to the present disclosure, it is possible to provide a tire that is capable of promoting reduction of environmental impact when considering the entire process of production, use, and disposal of synthetic rubber, and in which the ratio of sustainable materials is increased.

### BRIEF DESCRIPTION OF THE DRAWINGS

In the accompanying drawings:

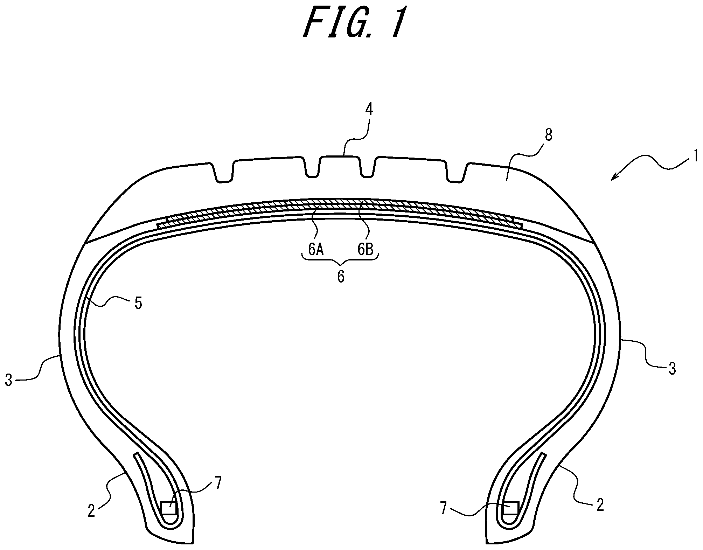

FIG. 1 is a cross-sectional view of one embodiment of a tire according to the present disclosure.

### DETAILED DESCRIPTION

Hereinafter, the rubber composition for a tire, tread rubber, and tire of the present disclosure will be exemplified and described in detail based on embodiments thereof.

### <Definitions>

The compounds described in the present specification may be partially or entirely derived from fossil resources, derived from biological resources such as plant resources, or derived from recycled resources such as used tires. Furthermore, they may be derived from a mixture of any two or more of fossil resources, biological resources, and recycled resources.

In the present specification, the "ratio of sustainable materials" refers to the total mass percentage of materials derived from biological resources (biomass resources) and materials derived from recycled resources in the target rubber composition for a tire, tread rubber, and tire.

In the present specification, the aforementioned biological resources (biomass resources) refer to carbon-neutral organic resources of biological origin, including, for example, those stored in the form of starch or cellulose, the bodies of animals that grow by eating plants, products obtained by processing plants or animals, and so forth, and exclude fossil resources (such as petroleum, coal, natural gas, etc.). The biological resources may be edible or non-edible, but from the perspective of not competing with food and effective utilization of resources, non-edible resources are preferred.

Specific examples of the aforementioned biological resources include, for example, cellulose-based crops (pulp, kenaf, wheat straw, rice straw, waste paper, papermaking residues, etc.), wood, charcoal, compost, kitchen waste, plant oil cake, fishery residues, livestock excrement, food waste, sewage sludge, natural rubber, cotton, fats and oils (palm oil, castor oil, cottonseed oil, soybean oil, linseed oil, rapeseed oil, Cocos nucifera oil, peanut oil, tall oil, corn oil, rice bran oil, safflower oil, sesame oil, olive oil, sunflower oil, palm kernel oil, camellia oil, jojoba oil, macadamia nut oil, tung oil, coconut oil, etc.), carbohydrate-based crops (corn, wheat, rice, rice husk, rice bran, old rice, tubers, buckwheat, cassava, sago palm, sugarcane, etc.), bagasse (i.e., residue after juice extraction from sugarcane), soybeans, okara (soy pulp), essential oils (pine oil, orange oil, eucalyptus oil, etc.), black liquor from pulp, algae, and the like. As the biological resource, it is also possible to use processed forms thereof (i.e., substances derived from biological resources). Processing methods include, for example, biological processing methods utilizing the action of microorganisms, plants, animals, or their tissue cultures; chemical processing methods utilizing acids, alkalis, catalysts, thermal energy, light energy, etc.; physical processing methods such as micronization, compression, microwave treatment, electromagnetic wave treatment, and so forth. Furthermore, as the biological resource, it is also possible to use substances extracted or purified from the aforementioned biological resources or processed biological resources (i.e., substances derived from biological resources). For example, sugars, proteins, amino acids, fatty acids, fatty acid esters, etc., purified from the aforementioned biological resources, may also be used. Examples of the sugars include sucrose, glucose, trehalose, fructose, lactose, galactose, xylose, allose, talose, gulose, altrose, mannose, idose, arabinose, apiose, maltose, cellulose, starch, chitin, etc., derived from biological resources. Examples of the proteins include compounds formed by linking amino acids (preferably L-amino acids) derived from biological resources, and oligopeptides such as dipeptides are also included. Examples of the amino acids include valine, leucine, isoleucine, arginine, lysine, asparagine, glutamine, phenylalanine, etc., derived from biological resources, among which valine, leucine, isoleucine, arginine, and phenylalanine are preferred. The amino acids may be L-amino acids or D-amino acids, but from the perspective of abundance in nature and ease of availability, L-amino acids are preferred. Examples of the fatty acids include butyric acid, palmitic acid, stearic acid, oleic acid, linoleic acid, linolenic acid, etc., derived from biological resources. Examples of the fatty acid esters include plant oils, animal oils, and modified products of fats and oils derived from biological resources. Various materials and impurities may be mixed in these biological resources.

In the present specification, the aforementioned recycled resources refer to resources obtained by recycling products that have been used once, collected without being used, or discarded. For example, as recycled resources, resources obtained by recycling used rubber products such as used tires may be mentioned.

### <Rubber Composition for Tire>

The rubber composition for a tire of the present embodiment contains a rubber component (A) including isoprene skeleton rubber (A1) and synthetic rubber (A2), wherein the content of the isoprene skeleton rubber (A1) is 10 to 90 parts by mass and the content of the synthetic rubber (A2) is 90 to 10 parts by mass in 100 parts by mass of the rubber component (A). Furthermore, in the rubber composition for a tire of the present embodiment, the synthetic rubber (A2) is characterized by including synthetic rubber (A2-1) supplied according to a mass balance approach.

In the rubber composition for a tire of the present embodiment, the synthetic rubber (A2-1) supplied according to a mass balance approach is synthetic rubber to which characteristics derived from biological resources or recycled resources are allocated by a mass balance approach. Since the rubber composition for a tire of the present embodiment includes, as at least a part of the synthetic rubber (A2), synthetic rubber (A2-1) supplied according to a mass balance approach, the ratio of sustainable materials is high. Therefore, by applying the rubber composition for a tire of the present embodiment to a tire, it is possible to improve the ratio of sustainable materials in the tire. Furthermore, since the rubber composition for a tire of the present embodiment utilizes synthetic rubber (A2-1) supplied according to a mass balance approach, it is possible to promote reduction of environmental impact when considering the entire process of production, use, and disposal of synthetic rubber.

Note that, even when a rubber composition in which at least a part of the synthetic rubber (A2) is synthetic rubber (A2-1) supplied according to a mass balance approach is applied to a tire, the tire performance such as low fuel consumption performance (low loss property) and wet gripping performance (gripping performance on wet road surfaces) can be made equivalent.

### (Rubber Component (A))

The rubber composition for a tire of the present embodiment contains a rubber component (A), and the rubber component (A) imparts rubber elasticity to the composition. The rubber component (A) preferably has a sustainable ratio of 30 mass% or more, more preferably 40 mass% or more, even more preferably 50 mass% or more, still more preferably 60 mass% or more, yet more preferably 70 mass% or more, further preferably 80 mass% or more, even more preferably 90 mass% or more, and particularly preferably 100 mass%.

Here, the "sustainable ratio" of the rubber component (A) refers to the total mass percentage of components derived from biological resources (biomass resources) and components derived from recycled resources in the rubber component (A).

As the rubber component (A), rubber derived from biological resources and rubber derived from recycled resources are preferred.

Here, the proportion of monomer components derived from biological resources in 100 mol% of the monomer components constituting the rubber derived from biological resources is preferably 50 mol% or more, more preferably 70 mol% or more, even more preferably 80 mol% or more, still more preferably 90 mol% or more, particularly preferably 95 mol% or more, and may be 100 mol%.

Also, the proportion of monomer components derived from recycled resources in 100 mol% of the monomer components constituting the rubber derived from recycled resources is preferably 50 mol% or more, more preferably 70 mol% or more, even more preferably 80 mol% or more, still more preferably 90 mol% or more, particularly preferably 95 mol% or more, and may be 100 mol%.

The rubber component (A) is a component that contributes to crosslinking and usually has a weight-average molecular weight (Mw) of 10,000 or more, preferably 50,000 or more, more preferably 150,000 or more, even more preferably 200,000 or more, and also preferably 5,000,000 or less, more preferably 2,000,000 or less, even more preferably 1,500,000 or less, and still more preferably 1,300,000 or less.

Note that, in the present specification, the weight-average molecular weight (Mw) of the rubber component (A) can be determined, for example, by conversion to standard polystyrene based on measurement values obtained using a gel permeation chromatograph (GPC) (GPC-8000 series manufactured by Tosoh Corporation, detector: differential refractometer, column: TSKGEL SUPERMULTIPORE HZ-M manufactured by Tosoh Corporation).

In the rubber composition for a tire of the present embodiment, the rubber component (A) includes isoprene skeleton rubber (A1) and synthetic rubber (A2).

Here, in the present specification, synthesized isoprene skeleton rubber is not included in the synthetic rubber (A2) but is included in the isoprene skeleton rubber (A1). In other words, in the present specification, "synthetic rubber (A2)" refers to synthetic rubber other than synthesized isoprene skeleton rubber.

### - Isoprene Skeleton Rubber (A1) -

Examples of the isoprene skeleton rubber (A1) include natural rubber (NR), synthetic isoprene rubber (IR), upgraded natural rubber (upgraded NR), modified natural rubber (modified NR), and modified synthetic isoprene rubber (modified IR). As the natural rubber (NR), for example, RSS #3, TSR20 (for example, SIR20 or STR20), and other types commonly used in the tire industry can be used. The origin of the natural rubber (NR) is not particularly limited, and examples include those derived from the Para rubber tree, guayule, Russian dandelion, and the like. As the synthetic isoprene rubber (IR), there is no particular limitation, and, for example, IR2200 and other types commonly used in the tire industry can be used. Examples of upgraded NR include deproteinized natural rubber (DPNR), ultra-pure natural rubber (UPNR), and the like. Examples of modified NR include epoxidized natural rubber (ENR), hydrogenated natural rubber (HNR), grafted natural rubber, and the like. Examples of modified IR include epoxidized synthetic isoprene rubber, hydrogenated synthetic isoprene rubber, grafted synthetic isoprene rubber, and the like. These isoprene skeleton rubbers may be used alone or in combination of two or more. Among these, NR is preferred as the isoprene skeleton rubber.

The isoprene skeleton rubber (A1) preferably has a sustainable ratio of 30 mass% or more, more preferably 40 mass% or more, even more preferably 50 mass% or more, still more preferably 60 mass% or more, yet more preferably 70 mass% or more, further preferably 80 mass% or more, even more preferably 90 mass% or more, and particularly preferably 100 mass%.

To set the sustainable ratio of the isoprene skeleton rubber (A1) within the above range, it is preferable to use natural rubber (NR) or to use a polymer synthesized using isoprene derived from biological resources or isoprene derived from recycled resources as the monomer component. In this case, the synthesized polymer may be a homopolymer of a monomer derived from biological resources, a homopolymer of a monomer derived from recycled resources, a copolymer of a monomer derived from biological resources and a monomer derived from recycled resources, or a copolymer of a monomer derived from biological resources and/or a monomer derived from recycled resources and a monomer derived from fossil resources (such as petroleum).

The content of the isoprene skeleton rubber (A1) is 10 to 90 parts by mass, preferably 20 to 80 parts by mass, in 100 parts by mass of the rubber component (A). When the content of the isoprene skeleton rubber (A1) in 100 parts by mass of the rubber component (A) is 10 parts by mass or more, the breaking strength of the rubber composition can be increased, and the durability of a tire using the rubber composition can be improved. Furthermore, when the content of the isoprene skeleton rubber (A1) in 100 parts by mass of the rubber component (A) is 90 parts by mass or less, the content of the synthetic rubber (A2) described below can be set to 10 parts by mass or more, and by blending the isoprene skeleton rubber (A1) with a desired synthetic rubber (A2) according to the purpose, it becomes easier to improve the performance of a tire using the rubber composition according to the intended purpose.

### - Synthetic Rubber (A2) -

The synthetic rubber (A2) is characterized by including synthetic rubber (A2-1) supplied according to a mass balance approach. The synthetic rubber (A2-1) supplied according to a mass balance approach is synthetic rubber to which characteristics derived from biological resources or recycled resources are allocated by a mass balance approach. By including synthetic rubber to which characteristics derived from biological resources or recycled resources are allocated by a mass balance approach, it is possible to contribute to reduction of environmental impact when considering the entire process of production, use, and disposal of synthetic rubber.

The content of the synthetic rubber (A2) is preferably 10 to 90 parts by mass, more preferably 20 to 80 parts by mass, in 100 parts by mass of the rubber component (A). When the content of the synthetic rubber (A2) in 100 parts by mass of the rubber component (A) is 10 parts by mass or more, by blending with the above-described isoprene skeleton rubber (A1), it becomes easier to improve the performance of a tire using the rubber composition according to the intended purpose. Furthermore, when the content of the synthetic rubber (A2) in 100 parts by mass of the rubber component (A) is 90 parts by mass or less, the content of the above-described isoprene skeleton rubber (A1) can be set to 10 parts by mass or more, the breaking strength of the rubber composition can be increased, and the durability of a tire using the rubber composition can be improved.

Furthermore, the proportion of the synthetic rubber (A2-1) supplied according to a mass balance approach in the synthetic rubber (A2) is preferably 10 to 90 mass%, and more preferably 20 to 80 mass%. When the proportion of the synthetic rubber (A2-1) supplied according to a mass balance approach in the synthetic rubber (A2) is 10 mass% or more, the ratio of sustainable materials in a tire using the rubber composition can be further improved.

As certification for the mass balance approach, ISCC PLUS certification may be mentioned. In ISCC PLUS certification, bio-based raw materials, circular raw materials, and renewable raw materials can be certified, among which circular raw materials can be classified into bio-circular and non-bio-circular.

The aforementioned bio-based raw materials and renewable raw materials are raw materials derived from unused biomass from related industries including agriculture, forestry, and fisheries/aquaculture, and examples include fermentation or biodegradable fractions of products such as corn, sugarcane, rapeseed, and the like.

The aforementioned circular raw materials are materials at the beginning of the supply chain, regarded as waste/treatment residues, but instead of being landfilled or used for energy purposes, are raw materials that have been reused or recycled. Among circular raw materials, "bio-circular" refers to biodegradable fractions of biological origin waste and residues from related industries including agriculture, forestry, and fisheries/aquaculture, industrial waste, and municipal waste, and examples include waste cooking oil (UCO: Used Cooking Oil), tall oil (a mixture of fatty acids, resin acids, unsaponifiables, etc., generated as a by-product when digesting pulp raw materials and separating fibers during pulp production), food waste, and the like. On the other hand, "non-bio-circular" refers to raw materials derived from mechanical and/or chemical processing of recyclable materials (fossil-based) of non-biological origin, and examples include plastic waste, used tires, and the like.

Furthermore, as the aforementioned bio-based raw materials, plant-derived raw materials are preferred, and as the aforementioned circular raw materials, raw materials obtained from plant-derived byproducts, raw materials obtained by recycling plant-derived materials, and raw materials obtained by recycling fossil resource-derived materials are preferred. In other words, it is preferable that the synthetic rubber (A2) includes synthetic rubber derived from at least one type of plant-derived raw material, plant-derived by-product, raw material obtained by recycling a plant-derived material, or raw material obtained by recycling a fossil resource-derived material. Since plant-derived raw materials, plant-derived byproducts, raw materials obtained by recycling plant-derived materials, and raw materials obtained by recycling fossil resource-derived materials are abundantly available, it is easy to secure the quantity, and a rubber composition for a tire including synthetic rubber derived from at least one of these raw materials as the synthetic rubber (A2) can greatly contribute to reduction of environmental impact when considering the entire process of production, use, and disposal of synthetic rubber.

The synthetic rubber (A2) preferably includes both synthetic rubber derived from biological resources and synthetic rubber derived from fossil resources. Here, it is preferable that the synthetic rubber (A2) includes 0.1 to 99 mass% of synthetic rubber derived from biological resources and 99.9 to 1 mass% of synthetic rubber derived from fossil resources. By including 0.1 mass% or more of synthetic rubber derived from biological resources in the synthetic rubber (A2), the ratio of sustainable materials in a tire to which the rubber composition is applied can be significantly improved, and by including 1 mass% or more of synthetic rubber derived from fossil resources in the synthetic rubber (A2), the flexibility of the origin of the synthetic rubber (A2) is improved, making production of the rubber composition easier. Therefore, a rubber composition for a tire in which the synthetic rubber (A2) includes 0.1 to 99 mass% of synthetic rubber derived from biological resources and 99.9 to 1 mass% of synthetic rubber derived from fossil resources is excellent in balancing reduction of environmental impact and productivity.

Examples of the synthetic rubber (A2) include butadiene-based rubbers such as butadiene rubber (BR) and aromatic vinyl compound-butadiene copolymer rubber (for example, styrene-butadiene rubber (SBR)). Here, the term "butadiene-based rubber" refers to rubber containing units derived from butadiene as monomer units. Furthermore, it is preferable that the butadiene used as a raw material for the butadiene-based rubber is derived from a biological resource or a recycled resource.

Examples of the butadiene rubber (BR) include, for example, high-cis butadiene rubber, low-cis butadiene rubber, and butadiene rubber containing syndiotactic polybutadiene crystals. Commercial products can be used as the butadiene rubber (BR), and examples of such commercial products include those manufactured by UBE Elastomer Co., Ltd., ENEOS Materials Corporation, Asahi Kasei Corporation, Zeon Corporation, and the like. These butadiene rubbers may be used alone or in combination of two or more types.

Examples of the aromatic vinyl compound-butadiene copolymer rubber (for example, SBR) include, for example, emulsion-polymerized aromatic vinyl compound-butadiene copolymer rubber (for example, emulsion-polymerized styrene-butadiene rubber (E-SBR)), solution-polymerized aromatic vinyl compound-butadiene copolymer rubber (for example, solution-polymerized styrene-butadiene rubber (S-SBR)), and the like. In the aromatic vinyl compound-butadiene copolymer rubber, examples of the aromatic vinyl compound (aromatic vinyl monomer) include styrene, vinylnaphthalene, divinylnaphthalene, and the like. These aromatic vinyl compounds may be used alone or in combination of two or more types. Among these, styrene is preferable, and styrene derived from a biological resource and styrene derived from a recycled resource are particularly preferable. That is, SBR is preferable as the aromatic vinyl compound-butadiene copolymer rubber. Note that the styrene may have a substituent. Commercial products can be used as the aromatic vinyl compound-butadiene copolymer rubber, and examples of such commercial products include those manufactured by Asahi Kasei Corporation, ENEOS Materials Corporation, Zeon Corporation, Sumitomo Chemical Co., Ltd., and the like. These aromatic vinyl compound-butadiene copolymer rubbers may be used alone or in combination of two or more types.

The butadiene-based rubber preferably has a sustainable ratio of 30 mass% or more, more preferably 40 mass% or more, even more preferably 50 mass% or more, still more preferably 60 mass% or more, yet more preferably 70 mass% or more, further preferably 80 mass% or more, even further preferably 90 mass% or more, and particularly preferably 100 mass%.

In order to set the sustainable ratio of the butadiene-based rubber within the above range, for example, it is sufficient to use a polymer synthesized using, as monomer components, butadiene derived from a biological resource, butadiene derived from a recycled resource, an aromatic vinyl compound derived from a biological resource (for example, styrene derived from a biological resource), or an aromatic vinyl compound derived from a recycled resource (for example, styrene derived from a recycled resource). In this case, the synthesized polymer may be a homopolymer of a monomer derived from a biological resource, a homopolymer of a monomer derived from a recycled resource, a copolymer of a monomer derived from a biological resource and a monomer derived from a recycled resource, or a copolymer of a monomer derived from a biological resource and/or a monomer derived from a recycled resource and a monomer derived from a fossil resource (such as petroleum). Note that the term "butadiene rubber (B-BR) derived from a biological resource (biomass resource)" and "aromatic vinyl compound-butadiene copolymer rubber derived from a biological resource (for example, styrene-butadiene rubber (B-SBR) derived from a biological resource (biomass resource))" include not only rubber obtained by polymerizing butadiene and the like according to conventional methods, but also rubber obtained by reactions or enzymatic reactions using microorganisms, plants, animals, and tissue cultures thereof (hereinafter also referred to as "microorganisms, etc.").

In addition, in order to set the sustainable ratio of the entire rubber component (A) within the above range, it is preferable to use natural rubber (NR) as the rubber component (A), or to use a polymer synthesized using, as monomer components, monomer components derived from a biological resource or monomer components derived from a recycled resource.

Generally, materials (rubber and its monomers, fillers, resins, etc.) for rubber compositions for tires require large-scale manufacturing equipment for their production and are usually produced at large factories in specific regions, requiring a great deal of energy for storage and transportation of raw materials and products. In contrast, materials derived from biological resources (biomass resources) originate from agricultural products, forests, etc. in each region, and can also be produced on a small scale by fermentation of microorganisms or catalytic reactions, so by utilizing local products or waste, it is possible to reduce the energy required for transportation and storage of raw materials, and furthermore, to reduce the energy required for transportation and storage of the manufactured materials to the tire factory, thereby being environmentally friendly. In addition, materials derived from recycled resources can be obtained, for example, by dismantling and pyrolyzing used tires to extract materials constituting the tire, such as rubber, fillers, steel cords, and the like. Furthermore, sulfur can be obtained from biological resources or processed products thereof by a method including a desulfurization step for removing sulfur-containing substances from the biological resource or processed product thereof by desulfurization, a recovery step for recovering sulfur from the desulfurization residue generated in the desulfurization step, and a processing step for processing the recovered sulfur into sulfur for vulcanization (for example, the method described in Japanese Patent Application No. 2022-140390), and thus materials for rubber compositions for tires can be obtained from various wastes or used articles. In this way, by using sustainable materials (materials derived from biological resources or materials derived from recycled resources), it is possible to comprehensively reduce environmental impact in tire manufacturing, such as reduction of carbon dioxide emissions over the entire life cycle (LCCO2), reduction of energy consumption over the entire life cycle (LCE), reduction of costs generated over the entire life cycle (LCC), and reduction of fossil resource usage.

Furthermore, when manufacturing the rubber composition, the ratio of monomer components derived from biological resources, monomer components derived from recycled resources, and monomer components derived from fossil resources (for example, monomer components derived from fossil resources) can be appropriately selected according to the supply situation of biological resources, recycled resources, and fossil resources and/or market demands (for example, demand for biological resources as food), and by polymerizing monomer components derived from biological resources, monomer components derived from recycled resources, and monomer components derived from fossil resources, it is possible to obtain rubber derived from sustainable materials (materials derived from biological resources or materials derived from recycled resources) having performance equivalent to that of conventional synthetic rubber. Note that, when using monomer components derived from recycled resources, it may be difficult to separate them from monomer components derived from fossil resources due to reasons in the manufacturing process of the monomer. In such cases, the environmental impact can be evaluated by adopting the mass balance approach.

The ratio of each monomer unit (for example, units derived from isoprene, units derived from butadiene, units derived from aromatic vinyl compounds) in the entire rubber component (A) can be appropriately adjusted according to the member to which it is applied. The ratio of each monomer unit in the entire rubber component can be adjusted, for example, by appropriately combining the above-described isoprene skeleton rubber and butadiene-based rubber. In addition, the ratio of cis-bonded units among the units derived from butadiene can also be appropriately adjusted according to the member to which it is applied.

In this specification, the term "monomer unit" means a structural unit of a polymer, "unit derived from isoprene" means a structural unit in a polymer constructed based on isoprene as a monomer (including isoprene units in natural rubber), "unit derived from butadiene" means a structural unit in a polymer constructed based on butadiene as a monomer, and "unit derived from an aromatic vinyl compound" means a structural unit in a polymer constructed based on an aromatic vinyl compound as a monomer.

In this specification, the ratio of each monomer unit is measured by NMR.

The rubber component (A) may further include, in addition to the above-described isoprene skeleton rubber (A1), butadiene rubber (BR), and aromatic vinyl compound-butadiene copolymer rubber (for example, SBR), diene-based rubbers such as acrylonitrile-butadiene rubber (NBR), chloroprene rubber (CR), butyl rubber (IIR), and styrene-isoprene-butadiene copolymer rubber (SIBR). These rubber components may be used alone or in combination of two or more types.

The rubber component (A) may be modified to introduce functional groups that interact with fillers such as carbon black and silica. Examples of such functional groups include amino groups, amide groups, isocyanate groups, imino groups, imidazole groups, urea groups, ammonium groups, imide groups, hydrazo groups, azo groups, diazo groups, carboxyl groups, nitrile groups, pyridyl groups, alkoxy groups, hydroxyl groups, oxy groups, epoxy groups, ether groups, carbonyl groups, oxycarbonyl groups, silyl groups, alkoxy silyl groups, mercapto groups, sulfide groups, disulfide groups, sulfonyl groups, sulfinyl groups, thiocarbonyl groups, and the like, and these functional groups may have substituents. These functional groups may be introduced into the rubber component singly or in combination of two or more types. Among these, amino groups, alkoxy groups, and alkoxy silyl groups are preferable, and more preferably, substituted amino groups in which a hydrogen atom of the amino group is substituted with an alkyl group having 1 to 6 carbon atoms, alkoxy groups having 1 to 6 carbon atoms, and alkoxy silyl groups having 1 to 6 carbon atoms.

The functional groups can be introduced, for example, by reacting the rubber component with a compound (modifier) having such a functional group. The functional group is a modifying functional group having interaction with fillers such as silica and carbon black, and examples include nitrogen-containing functional groups, silicon-containing functional groups, and oxygen-containing functional groups. Examples of compounds (modifiers) having nitrogen-containing functional groups include amino group-containing compounds; examples of compounds (modifiers) having silicon-containing functional groups include silicon halides and hydrocarbyloxy silane compounds; and examples of compounds (modifiers) having oxygen-containing functional groups include alkoxy group-containing compounds, alkylene oxide group-containing compounds, and trialkylsilyloxy group-containing compounds. More specifically, compounds described in WO 2016/194316 A1 and WO 2019/117256 A1 can be mentioned. These modifiers may be used alone or in combination of two or more types.

The rubber derived from sustainable materials (materials derived from biological resources or materials derived from recycled resources) (particularly, synthetic rubber (A2-1) supplied according to a mass balance approach) can be produced, for example, by using monomer components derived from biological resources or monomer components derived from recycled resources, and, if necessary, monomer components derived from fossil resources, in the same manner as the conventional method for producing synthetic rubber derived from fossil resources. In addition, the rubber derived from sustainable materials (particularly, rubber derived from biological resources) can also be obtained by reactions or enzymatic reactions using microorganisms, etc.

Note that, even if a part of the monomer components in the synthetic rubber (A2-1) supplied by assigning biological resource-derived characteristics or recycled resource-derived characteristics according to the mass balance approach is derived from fossil resources, the ratio of sustainable materials [the total mass ratio of materials derived from biological resources (biomass resources) and materials derived from recycled resources] can be treated as 100 mass%. Because it is a mass balance approach, even if a part of the monomer components in the synthetic rubber (A2-1) supplied by assigning biological resource-derived characteristics or recycled resource-derived characteristics is derived from fossil resources, synthetic rubber in which a part of the monomer components is derived from biological resources or recycled resources, and synthetic rubber assigned fossil resource-derived characteristics and treated as having a sustainable material ratio of 0 mass%, are supplied separately from the synthetic rubber (A2-1), so by using the synthetic rubber (A2-1), it is possible to greatly contribute to reducing environmental impact in the overall production, use, and disposal of synthetic rubber.

As for the method for preparing rubber derived from biological resources from the above-mentioned biological resources, for example, the method described in JP 2022-179158 A can be used. For example, by using butadiene obtained from biological resources as a monomer component, butadiene rubber (B-BR) derived from biological resources (biomass resources) can be obtained, and by using styrene obtained from biological resources and butadiene obtained from biological resources as monomer components, styrene-butadiene rubber (B-SBR) derived from biological resources (biomass resources) can be obtained. Here, as methods for obtaining B-BR and B-SBR from biological resources, in addition to artificial polymerization, methods such as polymerization in vivo and polymerization using bio-derived enzymes can be mentioned. The molecular weight, branching, microstructure, and the like of the obtained B-BR and B-SBR can be appropriately adjusted by changing the polymerization conditions according to known methods in accordance with the desired tire performance.

As the butadiene obtained from biological resources, butadiene derived from alkyl alcohols (preferably ethanol and butanol, more preferably butanol), butadiene derived from alkenes (preferably ethylene), and butadiene derived from unsaturated carboxylic acids (preferably tiglic acid) can be suitably used. These butadienes may be used in combination of two or more types.

As the styrene obtained from biological resources, styrene obtained from plants (preferably plants belonging to the Hamamelidaceae, Styracaceae, or Apocynaceae families, more preferably plants belonging to the Liquidambar, Styrax, or Catharanthus genera, and even more preferably Liquidambar styraciflua, Styrax japonicus, or Catharanthus roseus), and styrene obtained from microorganisms (preferably microorganisms belonging to the genus Penicillium or Escherichia, more preferably P. citrinum or transformed E. coli) can be suitably used. These styrenes may also be used in combination of two or more types.

Recently, biomass complexes centered on bioethanol and bioethylene are being planned, but bioethanol and bioethylene are produced mainly using saccharides and/or cellulose as biological resources, and cannot effectively utilize other biological resources such as proteins, lipids, amino acids, and the like. Furthermore, saccharides compete with food, and excessive use of cellulose leads to deforestation. Therefore, in addition to the supply situation of various biological resources, the supply situation of recycled resources, the supply situation of fossil resources, and market demands (for example, demand for biomass resources as food), it is preferable to use a plurality of types of monomer components derived from biological resources as the monomer components derived from biological resources, or to use monomer components derived from biological resources, monomer components derived from recycled resources, and monomer components derived from fossil resources in combination, and further to appropriately adjust the ratio of these monomer components for use. In this way, it is possible to effectively utilize a wide range of biological resources such as sugars, proteins, and lipids, as well as recycled resources, without relying on a single type of biological resource, to stably supply rubber derived from sustainable materials, and furthermore, to take environmental considerations into account according to the situation at the time of production.

When using a plurality of types of monomer components derived from biological resources, it is preferable to use monomer components derived from different biological resources, that is, monomer components obtained from different biological resources. Specifically, as the butadiene derived from biological resources, it is preferable to use a mixture of butadiene derived from a plurality of different biological resources, and/or as the styrene derived from biological resources, it is preferable to use a mixture of styrene derived from a plurality of different biological resources. In this way, it is possible to effectively utilize a plurality of types of biological resources.

### --Styrene-Butadiene Rubber (SBR)--

It is preferable that the synthetic rubber (A2) contains styrene-butadiene rubber (SBR). By including styrene-butadiene rubber as the synthetic rubber (A2) in the rubber component (A), it is possible to improve both the high fuel efficiency and wear resistance performance of a tire to which the rubber composition is applied.

The styrene-butadiene rubber preferably has a glass transition temperature of less than -40°C. When the glass transition temperature of the styrene-butadiene rubber is lower than -40°C, it is possible to further improve both the high fuel efficiency and wear resistance performance of a tire to which the rubber composition is applied. From the viewpoint of further improving the high fuel efficiency of the tire, the glass transition temperature of the styrene-butadiene rubber is more preferably -45°C or lower, and even more preferably -50°C or lower.

Furthermore, the styrene-butadiene rubber preferably has a glass transition temperature higher than -90°C. Styrene-butadiene rubber having a glass transition temperature higher than -90°C is easier to synthesize.

The content of the styrene-butadiene rubber is preferably 10 parts by mass or more, more preferably 20 parts by mass or more, even more preferably 30 parts by mass or more, still more preferably 40 parts by mass or more, and most preferably 50 parts by mass or more, and preferably 90 parts by mass or less, more preferably 80 parts by mass or less, per 100 parts by mass of the rubber component (A). When the content of the styrene-butadiene rubber is 50 to 80 parts by mass per 100 parts by mass of the rubber component (A), it is possible to further improve both the high fuel efficiency and wet gripping performance of a tire to which the rubber composition is applied.

The styrene-butadiene rubber preferably has a bound styrene content of less than 15 mass%. The bound styrene content of the styrene-butadiene rubber refers to the proportion of styrene units contained in the styrene-butadiene rubber. When the bound styrene content of the styrene-butadiene rubber is less than 15 mass%, the glass transition temperature tends to be lower. The bound styrene content of the styrene-butadiene rubber is more preferably 14 mass% or less, even more preferably 13 mass% or less, and most preferably 12 mass% or less. Further, from the viewpoint of the antiwear performance of a tire to which the rubber composition is applied, the bound styrene content of the styrene-butadiene rubber is preferably 5 mass% or more, more preferably 7 mass% or more, and most preferably 8 mass% or more.

The bound styrene content of the styrene-butadiene rubber can be adjusted by the amount of monomer used in the polymerization of the styrene-butadiene rubber, the degree of polymerization, and the like.

The styrene-butadiene rubber is preferably modified with a modifier having a nitrogen atom-containing functional group and an alkoxy group. When the styrene-butadiene rubber is modified with a modifier having a nitrogen atom-containing functional group and an alkoxy group, the balance among the wet gripping performance, high fuel efficiency, and antiwear performance of a tire to which the rubber composition is applied is further improved, and in particular, the high fuel efficiency and antiwear performance can be further enhanced.

The modifier having a nitrogen atom-containing functional group and an alkoxy group is a generic term for modifiers having at least one nitrogen atom-containing functional group and at least one alkoxy group.

The nitrogen atom-containing functional group is preferably selected from the following:
straight chain, branched chain, alicyclic, and aromatic ring-containing monovalent hydrocarbon groups having 1 to 30 carbon atoms, and also straight chain, branched chain, alicyclic, and aromatic ring-containing monovalent hydrocarbon groups having 1 to 30 carbon atoms and optionally having at least one hetero atom selected from an oxygen atom, a sulfur atom, and a phosphorus atom, that include a functional group selected from the group consisting of a primary amino group, a primary amino group protected by a hydrolyzable protecting group, an onium salt residue of a primary amine, an isocyanate group, a thioisocyanate group, an imino group, an imine, an amide group, a secondary amino group protected by a hydrolyzable protecting group, a cyclic secondary amino group, an onium salt residue of a cyclic secondary amine, a non-cyclic secondary amino group, an onium salt residue of a non-cyclic secondary amine, an isocyanuric acid triester residue, a cyclic tertiary amino group, a non-cyclic tertiary amino group, a nitrile group, a pyridyl group, an onium salt residue of a cyclic tertiary amine, and an onium salt residue of a non-cyclic tertiary amine.

### --- First Preferred Embodiment of Modified Styrene-Butadiene Rubber ---

The styrene-butadiene rubber (SBR) is preferably modified with an aminoalkoxysilane compound, and from the viewpoint of high affinity for fillers, it is more preferable that the terminal is modified with an aminoalkoxysilane compound. When the terminal of the styrene-butadiene rubber is modified with an aminoalkoxysilane compound, the interaction between the modified styrene-butadiene rubber and the filler (particularly silica) becomes especially strong.

The modified site of the styrene-butadiene rubber may be the molecular terminal as described above, or may be the main chain.

Styrene-butadiene rubber with a modified molecular terminal can be produced, for example, by reacting various modifiers with the terminal of a styrene-butadiene copolymer having an active terminal, according to the methods described in International Publication No. 2003/046020 and JP 2007-217562 A.

In one preferred embodiment, the styrene-butadiene rubber with a modified molecular terminal can be produced by reacting an aminoalkoxysilane compound with the terminal of a styrene-butadiene copolymer having an active terminal with a cis-1,4 bond content of 75% or more, and then stabilizing by reacting with a carboxylic acid partial ester of a polyhydric alcohol, according to the methods described in International Publication No. 2003/046020 and JP 2007-217562 A.

The carboxylic acid partial ester of a polyhydric alcohol refers to a partial ester of a polyhydric alcohol and a carboxylic acid and means a partial ester having at least one hydroxyl group. Specifically, esters of sugars or modified sugars having 4 or more carbon atoms and fatty acids are preferably used. More preferably, the ester is (1) a fatty acid partial ester of a polyhydric alcohol, particularly a partial ester (monoester, diester, or triester) of a saturated or unsaturated higher fatty acid having 10 to 20 carbon atoms and a polyhydric alcohol, or (2) an ester compound in which a partial ester of a polycarboxylic acid and a higher alcohol is bonded to a polyhydric alcohol in 1 to 3 units.

As the polyhydric alcohol used as a raw material for the partial ester, sugars having 5 or 6 carbon atoms and at least three hydroxyl groups (which may or may not be hydrogenated), glycols, polyhydroxy compounds, and the like are preferably used. As the raw material fatty acid, a saturated or unsaturated fatty acid having 10 to 20 carbon atoms is preferable, and examples include stearic acid, lauric acid, and palmitic acid.

Among the fatty acid partial esters of polyhydric alcohols, sorbitan fatty acid esters are preferable, and specific examples include sorbitan monolaurate, sorbitan monopalmitate, sorbitan monostearate, sorbitan tristearate, sorbitan monooleate, and sorbitan trioleate.

The aminoalkoxysilane compound is not particularly limited, but an aminoalkoxysilane compound represented by the following general formula (i) is preferred.

R¹¹ₐ-Si-(OR¹²)₄₋ₐ ··· (i)

In general formula (i), R¹¹ and R¹² each independently represent a monovalent aliphatic hydrocarbon group having 1 to 20 carbon atoms or a monovalent aromatic hydrocarbon group having 6 to 18 carbon atoms, at least one of R¹¹ and R¹² is substituted with an amino group, a is an integer from 0 to 2, and when there are a plurality of OR¹², each OR¹² may be the same or different, and the molecule does not contain an active proton.

As the aminoalkoxysilane compound, an aminoalkoxysilane compound represented by the following general formula (ii) is also preferred.

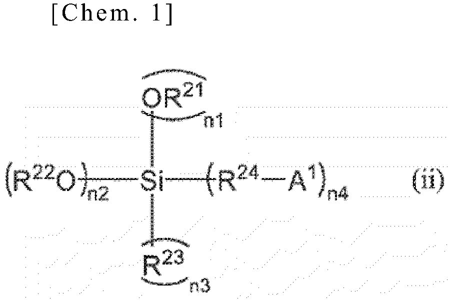

In general formula (ii), n1 + n2 + n3 + n4 = 4 (where n2 is an integer from 1 to 4, and n1, n3, and n4 are integers from 0 to 3).

A¹ is at least one functional group selected from the group consisting of a saturated cyclic tertiary amine compound residue, unsaturated cyclic tertiary amine compound residue, ketimine residue, nitrile group, (thio)isocyanate group, isocyanuric acid trihydrocarbyl ester group, nitrile group, pyridyl group, (thio)ketone group, amide group, and a primary or secondary amino group having a hydrolyzable group. When n4 is 2 or more, A¹ may be the same or different, and A¹ may be a divalent group that forms a cyclic structure with Si.

R²¹ is a monovalent aliphatic or alicyclic hydrocarbon group having 1 to 20 carbon atoms or a monovalent aromatic hydrocarbon group having 6 to 18 carbon atoms, and when n1 is 2 or more, they may be the same or different.

R²² is a monovalent aliphatic or alicyclic hydrocarbon group having 1 to 20 carbon atoms or a monovalent aromatic hydrocarbon group having 6 to 18 carbon atoms, and may contain a nitrogen atom and/or a silicon atom. When n2 is 2 or more, R²² may be the same or different, or may together form a ring.

R²³ is a monovalent aliphatic or alicyclic hydrocarbon group having 1 to 20 carbon atoms, a monovalent aromatic hydrocarbon group having 6 to 18 carbon atoms, or a halogen atom, and when n3 is 2 or more, they may be the same or different.

R²⁴ is a divalent aliphatic or alicyclic hydrocarbon group having 1 to 20 carbon atoms or a divalent aromatic hydrocarbon group having 6 to 18 carbon atoms, and when n4 is 2 or more, they may be the same or different.

As the hydrolyzable group in the primary or secondary amino group having a hydrolyzable group, a trimethylsilyl group or tert-butyldimethylsilyl group is preferred, and a trimethylsilyl group is particularly preferred.

The aminoalkoxysilane compound represented by the above general formula (ii) is preferably an aminoalkoxysilane compound represented by the following general formula (iii).

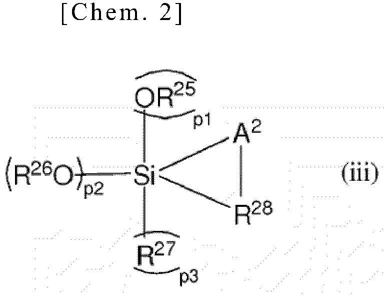

In general formula (iii), p1 + p2 + p3 = 2 (where p2 is an integer from 1 to 2, and p1 and p3 are integers from 0 to 1).

A² is NR^{a} (where R^{a} is a monovalent hydrocarbon group, hydrolyzable group, or nitrogen-containing organic group).

R²⁵ is a monovalent aliphatic or alicyclic hydrocarbon group having 1 to 20 carbon atoms or a monovalent aromatic hydrocarbon group having 6 to 18 carbon atoms.

R²⁶ is a monovalent aliphatic or alicyclic hydrocarbon group having 1 to 20 carbon atoms, a monovalent aromatic hydrocarbon group having 6 to 18 carbon atoms, or a nitrogen-containing organic group, and may contain a nitrogen atom and/or a silicon atom. When p2 is 2, R²⁶ may be the same or different, or may together form a ring.

R²⁷ is a monovalent aliphatic or alicyclic hydrocarbon group having 1 to 20 carbon atoms, a monovalent aromatic hydrocarbon group having 6 to 18 carbon atoms, or a halogen atom.

R²⁸ is a divalent aliphatic or alicyclic hydrocarbon group having 1 to 20 carbon atoms or a divalent aromatic hydrocarbon group having 6 to 18 carbon atoms.

As the hydrolyzable group, a trimethylsilyl group or tert-butyldimethylsilyl group is preferred, and a trimethylsilyl group is particularly preferred.

The aminoalkoxysilane compound represented by the above general formula (ii) is also preferably an aminoalkoxysilane compound represented by the following general formula (iv) or the following general formula (v).

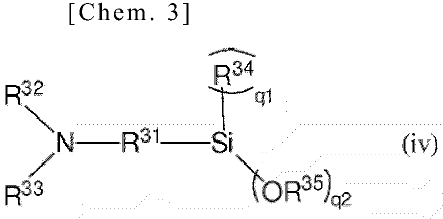

In general formula (iv), q1 + q2 = 3 (where q1 is an integer from 0 to 2, and q2 is an integer from 1 to 3).

R³¹ is a divalent aliphatic or alicyclic hydrocarbon group having 1 to 20 carbon atoms or a divalent aromatic hydrocarbon group having 6 to 18 carbon atoms.

R³² and R³³ each independently represent a hydrolyzable group, a monovalent aliphatic or alicyclic hydrocarbon group having 1 to 20 carbon atoms, or a monovalent aromatic hydrocarbon group having 6 to 18 carbon atoms.

R³⁴ is a monovalent aliphatic or alicyclic hydrocarbon group having 1 to 20 carbon atoms or a monovalent aromatic hydrocarbon group having 6 to 18 carbon atoms, and when q1 is 2, they may be the same or different.

R³⁵ is a monovalent aliphatic or alicyclic hydrocarbon group having 1 to 20 carbon atoms or a monovalent aromatic hydrocarbon group having 6 to 18 carbon atoms, and when q2 is 2 or more, they may be the same or different.

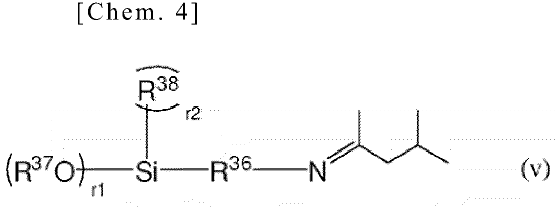

In general formula (v), r1 + r2 = 3 (where r1 is an integer from 1 to 3, and r2 is an integer from 0 to 2).

R³⁶ is a divalent aliphatic or alicyclic hydrocarbon group having 1 to 20 carbon atoms or a divalent aromatic hydrocarbon group having 6 to 18 carbon atoms.

R³⁷ is a dimethylaminomethyl group, dimethylaminoethyl group, diethylaminomethyl group, diethylaminoethyl group, methylsilyl(methyl)aminomethyl group, methylsilyl(methyl)aminoethyl group, methylsilyl(ethyl)aminomethyl group, methylsilyl(ethyl)aminoethyl group, dimethylsilylaminomethyl group, dimethylsilylaminoethyl group, or a monovalent aliphatic or alicyclic hydrocarbon group having 1 to 20 carbon atoms or a monovalent aromatic hydrocarbon group having 6 to 18 carbon atoms, and when r1 is 2 or more, they may be the same or different.

R³⁸ is a hydrocarbyloxy group having 1 to 20 carbon atoms, a monovalent aliphatic or alicyclic hydrocarbon group having 1 to 20 carbon atoms, or a monovalent aromatic hydrocarbon group having 6 to 18 carbon atoms, and when r2 is 2, they may be the same or different.

Specific examples of the aminoalkoxysilane compound represented by general formula (v) include N-(1,3-dimethylbutylidene)-3-triethoxysilyl-1-propanamine.

The aminoalkoxysilane compound represented by the above general formula (ii) is also preferably an aminoalkoxysilane compound represented by the following general formula (vi) or the following general formula (vii).

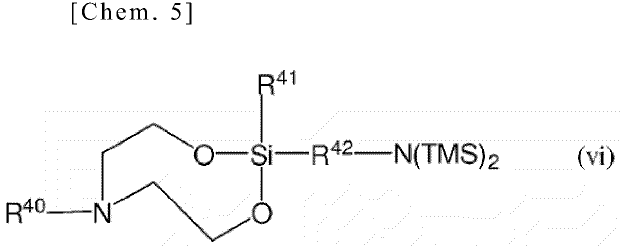

In general formula (vi), R⁴⁰ is a trimethylsilyl group, a monovalent aliphatic or alicyclic hydrocarbon group having 1 to 20 carbon atoms, or a monovalent aromatic hydrocarbon group having 6 to 18 carbon atoms.

R⁴¹ is a hydrocarbyloxy group having 1 to 20 carbon atoms, a monovalent aliphatic or alicyclic hydrocarbon group having 1 to 20 carbon atoms, or a monovalent aromatic hydrocarbon group having 6 to 18 carbon atoms.

R⁴² is a divalent aliphatic or alicyclic hydrocarbon group having 1 to 20 carbon atoms or a divalent aromatic hydrocarbon group having 6 to 18 carbon atoms.

Here, TMS denotes a trimethylsilyl group (the same applies hereinafter).

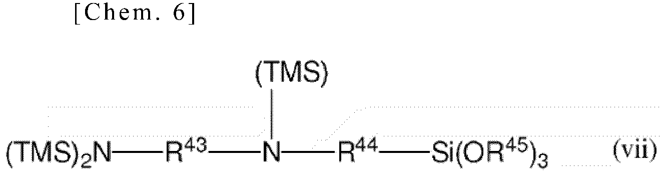

In general formula (vii), R⁴³ and R⁴⁴ each independently represent a divalent aliphatic or alicyclic hydrocarbon group having 1 to 20 carbon atoms or a divalent aromatic hydrocarbon group having 6 to 18 carbon atoms.

R⁴⁵ is a monovalent aliphatic or alicyclic hydrocarbon group having 1 to 20 carbon atoms or a monovalent aromatic hydrocarbon group having 6 to 18 carbon atoms, and each R⁴⁵ may be the same or different.

The aminoalkoxysilane compound represented by the above general formula (ii) is also preferably an aminoalkoxysilane compound represented by the following general formula (viii) or the following general formula (ix).

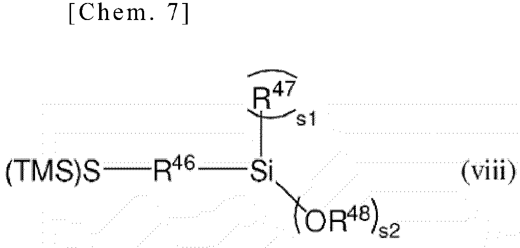

In general formula (viii), s1 + s2 = 3 (where s1 is an integer from 0 to 2, and s2 is an integer from 1 to 3).

R⁴⁶ is a divalent aliphatic or alicyclic hydrocarbon group having 1 to 20 carbon atoms or a divalent aromatic hydrocarbon group having 6 to 18 carbon atoms.

R⁴⁷ and R⁴⁸ each independently represent a monovalent aliphatic or alicyclic hydrocarbon group having 1 to 20 carbon atoms or a monovalent aromatic hydrocarbon group having 6 to 18 carbon atoms. A plurality of R⁴⁷ or R⁴⁸ may be the same or different.

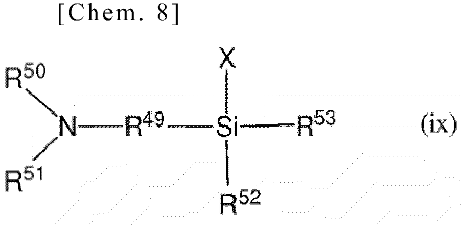

In general formula (ix), X is a halogen atom.

R⁴⁹ is a divalent aliphatic or alicyclic hydrocarbon group having 1 to 20 carbon atoms or a divalent aromatic hydrocarbon group having 6 to 18 carbon atoms.

R⁵⁰ and R⁵¹ each independently represent a hydrolyzable group, a monovalent aliphatic or alicyclic hydrocarbon group having 1 to 20 carbon atoms, or a monovalent aromatic hydrocarbon group having 6 to 18 carbon atoms, or R⁵⁰ and R⁵¹ are bonded together to form a divalent organic group.

R⁵² and R³³ each independently represent a halogen atom, a hydrocarbyloxy group, a monovalent aliphatic or alicyclic hydrocarbon group having 1 to 20 carbon atoms, or a monovalent aromatic hydrocarbon group having 6 to 18 carbon atoms.

As R⁵⁰ and R⁵¹, a hydrolyzable group is preferred, and as the hydrolyzable group, a trimethylsilyl group or tert-butyldimethylsilyl group is preferred, and a trimethylsilyl group is particularly preferred.

The aminoalkoxysilane compound represented by the above general formula (ii) is also preferably an aminoalkoxysilane compound represented by the following general formula (x), the following general formula (xi), the following general formula (xii), or the following general formula (xiii).

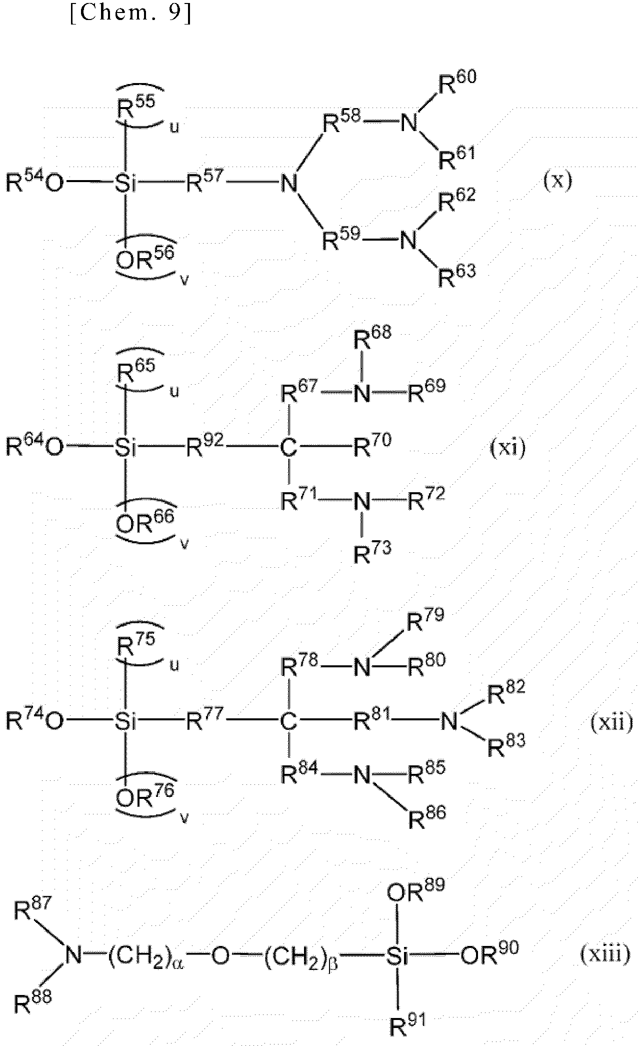

In general formulas (x) to (xiii), the symbols U and V are each integers from 0 to 2 satisfying U + V = 2.

R⁵⁴ to R⁹² in general formulas (x) to (xiii) may be the same or different, and are a monovalent or divalent aliphatic or alicyclic hydrocarbon group having 1 to 20 carbon atoms, or a monovalent or divalent aromatic hydrocarbon group having 6 to 18 carbon atoms.

In general formula (xiii), α and β are integers from 0 to 5.

Among the compounds satisfying general formulas (x), (xi), and (xii), particularly preferred are N1,N1,N7,N7-tetramethyl-4-((trimethoxysilyl)methyl)heptane-1,7-diamine; 2-((hexyl-dimethoxysilyl)methyl)-N1,N1,N3,N3-2-pentamethylpropane-1,3-diamine; N1-(3-(dimethylamino)propyl)-N3,N3-dimethyl-N1-(3-(trimethoxysilyl)propyl)propane-1,3-diamine; and 4-(3-(dimethylamino)propyl)-N1,N1,N7,N7-tetramethyl-4-((trimethoxysilyl)methyl)heptane-1,7-diamine.

Among the compounds satisfying general formula (xiii), particularly preferred are N,N-dimethyl-2-(3-(dimethoxymethylsilyl)propoxy)ethanamine; N,N-bis(trimethylsilyl)-2-(3-(trimethoxysilyl)propoxy)ethanamine; N,N-dimethyl-2-(3-(trimethoxysilyl)propoxy)ethanamine; and N,N-dimethyl-3-(3-(trimethoxysilyl)propoxy)propan-1-amine.

### --- Second Preferred Embodiment of Modified Styrene-Butadiene Rubber ---

The above styrene-butadiene rubber (SBR) is also preferably modified with a coupling agent represented by the following general formula (I). In this case, it is possible to further improve the fuel efficiency and wear resistance performance of a tire to which the rubber composition is applied.

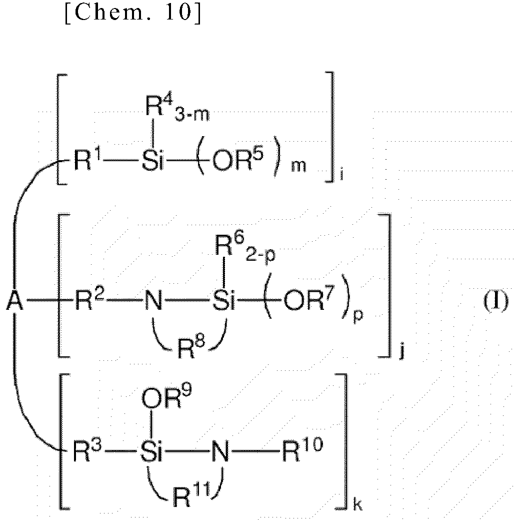

In the above general formula (I), R¹, R², and R³ each independently represent a single bond or an alkylene group having 1 to 20 carbon atoms.

R⁴, R⁵, R⁶, R⁷, and R⁹ each independently represent an alkyl group having 1 to 20 carbon atoms.

R⁸ and R¹¹ each independently represent an alkylene group having 1 to 20 carbon atoms.

R¹⁰ represents an alkyl group or a trialkylsilyl group having 1 to 20 carbon atoms.

m represents an integer of 1 to 3, and p represents 1 or 2.

When there are a plurality of R¹ to R¹¹, m, and p, each is independent.

i, j, and k each independently represent an integer of 0 to 6. However, i + j + k is an integer of 3 to 10.

"A" represents a hydrocarbon group having 1 to 20 carbon atoms, or an organic group having at least one atom selected from the group consisting of an oxygen atom, a nitrogen atom, a silicon atom, a sulfur atom, and a phosphorus atom, and not having an active hydrogen.

Here, in the general formula (I), the hydrocarbon group represented by A encompasses saturated, unsaturated, aliphatic, and aromatic hydrocarbon groups. Examples of organic groups having no active hydrogen include organic groups not having functional groups with active hydrogen, such as a hydroxyl group (-OH), secondary amino group (>NH), primary amino group (-NH₂), mercapto group (-SH), and the like.

The styrene-butadiene rubber modified with a coupling agent represented by the above general formula (I) preferably has a weight-average molecular weight (Mw) of 20 × 10⁴ to 300 × 10⁴, contains 0.25 to 30 mass% of modified styrene-butadiene rubber having a molecular weight of 200 × 10⁴ to 500 × 10⁴ with respect to the total amount of the modified styrene-butadiene rubber, and has a contraction factor (g') of less than 0.64.

In general, when a polymer has branches, its molecular size tends to be smaller compared to a linear polymer having the same absolute molecular weight, and the above contraction factor (g') is an index of the ratio of the molecular size relative to a linear polymer having the same assumed absolute molecular weight. That is, as the degree of branching of the polymer increases, the contraction factor (g') tends to decrease. In the present embodiment, intrinsic viscosity is used as an index of molecular size, and the linear polymer is used as one following the relationship of intrinsic viscosity [η] = -3.883M^{0.771}. The contraction factor (g') at each absolute molecular weight of the modified styrene-butadiene rubber is calculated, and the average value of the contraction factor (g') at an absolute molecular weight of 100 × 10⁴ to 200 × 10⁴ is defined as the contraction factor (g') of the modified styrene-butadiene rubber. Here, "branching" refers to a structure formed by direct or indirect bonding of another polymer to one polymer. The "degree of branching" refers to the number of polymers directly or indirectly bonded to one branch. For example, in the case where five styrene-butadiene copolymer chains, described later, are indirectly bonded to each other via a coupling residue described later, the degree of branching is 5. The coupling residue is a constituent unit of the modified styrene-butadiene rubber that is bonded to the styrene-butadiene copolymer chain, and is, for example, a structural unit derived from the coupling agent generated by reacting the styrene-butadiene copolymer and the coupling agent described later. The styrene-butadiene copolymer chain is a constituent unit of the modified styrene-butadiene rubber, and is, for example, a structural unit derived from the styrene-butadiene copolymer generated by reacting the styrene-butadiene copolymer and the coupling agent described later.

The contraction factor (g') is preferably less than 0.64, more preferably 0.63 or less, even more preferably 0.60 or less, further preferably 0.59 or less, and still more preferably 0.57 or less. The lower limit of the contraction factor (g') is not particularly limited and may be below the detection limit, but is preferably 0.30 or more, more preferably 0.33 or more, even more preferably 0.35 or more, and still more preferably 0.45 or more. By using modified styrene-butadiene rubber having a contraction factor (g') within this range, the processability of the rubber composition is improved.

Since the contraction factor (g') tends to depend on the degree of branching, for example, the contraction factor (g') can be controlled using the degree of branching as an index. Specifically, when the modified styrene-butadiene rubber has a degree of branching of 6, the contraction factor (g') tends to be 0.59 or more and 0.63 or less, and when the degree of branching is 8, the contraction factor (g') tends to be 0.45 or more and 0.59 or less.

The modified styrene-butadiene rubber modified with a coupling agent represented by the above general formula (I) preferably has branches and a degree of branching of 5 or more. The modified styrene-butadiene rubber preferably has one or more coupling residues and styrene-butadiene copolymer chains bonded to the coupling residue, and more preferably, the above branching includes a branch in which 5 or more of the styrene-butadiene copolymer chains are bonded to one coupling residue. By specifying the structure of the modified styrene-butadiene rubber so that the degree of branching is 5 or more and the branching includes a branch in which 5 or more styrene-butadiene copolymer chains are bonded to one coupling residue, the contraction factor (g') can be more reliably set to less than 0.64. The number of styrene-butadiene copolymer chains bonded to one coupling residue can be confirmed from the value of the contraction factor (g').

Further, the modified styrene-butadiene rubber more preferably has branches and a degree of branching of 6 or more. The modified styrene-butadiene rubber preferably has one or more coupling residues and styrene-butadiene copolymer chains bonded to the coupling residue, and more preferably, the above branching includes a branch in which 6 or more of the styrene-butadiene copolymer chains are bonded to one coupling residue. By specifying the structure of the modified styrene-butadiene rubber so that the degree of branching is 6 or more and the branching includes a branch in which 6 or more styrene-butadiene copolymer chains are bonded to one coupling residue, the contraction factor (g') can be set to 0.63 or less.

Furthermore, the modified styrene-butadiene rubber even more preferably has branches and a degree of branching of 7 or more, and still more preferably a degree of branching of 8 or more. The upper limit of the degree of branching is not particularly limited, but is preferably 18 or less. The modified styrene-butadiene rubber preferably has one or more coupling residues and styrene-butadiene copolymer chains bonded to the coupling residue, and even more preferably, the above branching includes a branch in which 7 or more of the styrene-butadiene copolymer chains are bonded to one coupling residue, and particularly preferably includes a branch in which 8 or more of the styrene-butadiene copolymer chains are bonded to one coupling residue. By specifying the structure of the modified styrene-butadiene rubber so that the degree of branching is 8 or more and the branching includes a branch in which 8 or more styrene-butadiene copolymer chains are bonded to one coupling residue, the contraction factor (g') can be set to 0.59 or less.

It is preferable that at least one terminal of the above styrene-butadiene copolymer chains is bonded to a silicon atom possessed by the coupling residue. In this case, the terminals of a plurality of styrene-butadiene copolymer chains may be bonded to one silicon atom. Further, the terminal of the styrene-butadiene copolymer chain and an alkoxy group having 1 to 20 carbon atoms or a hydroxyl group may be bonded to one silicon atom, and as a result, the one silicon atom may constitute an alkoxysilyl group having 1 to 20 carbon atoms or a silanol group.

The above modified styrene-butadiene rubber may be an oil-extended rubber to which extender oil is added. The modified styrene-butadiene rubber may be either non-oil-extended or oil-extended, but from the viewpoint of wear resistance performance, it is preferable that the Mooney viscosity measured at 100°C is 20 or more and 100 or less, and more preferably 30 or more and 80 or less.

The weight-average molecular weight (Mw) of the above modified styrene-butadiene rubber is preferably 20 × 10⁴ or more and 300 × 10⁴ or less, more preferably 50 × 10⁴ or more, even more preferably 64 × 10⁴ or more, and further preferably 80 × 10⁴ or more. The weight-average molecular weight is preferably 250 × 10⁴ or less, further preferably 180 × 10⁴ or less, and even more preferably 150 × 10⁴ or less. When the weight-average molecular weight is 20 × 10⁴ or more, the low loss property and wear resistance of the rubber composition can be sufficiently improved. When the weight-average molecular weight is 300 × 10⁴ or less, the processability of the rubber composition is improved.

The above modified styrene-butadiene rubber preferably contains, with respect to the total amount (100 mass%) of the modified styrene-butadiene rubber, 0.25 mass% or more and 30 mass% or less of modified styrene-butadiene rubber having a molecular weight of 200 × 10⁴ or more and 500 × 10⁴ or less (hereinafter also referred to as "specific high molecular weight component"). When the content of the specific high molecular weight component is 0.25 mass% or more and 30 mass% or less, the low loss property and wear resistance performance of the rubber composition can be sufficiently improved. The modified styrene-butadiene rubber preferably contains 1.0 mass% or more, more preferably 1.4 mass% or more, even more preferably 1.75 mass% or more, still more preferably 2.0 mass% or more, particularly preferably 2.15 mass% or more, and extremely preferably 2.5 mass% or more of the specific high molecular weight component. The modified styrene-butadiene rubber preferably contains 28 mass% or less, more preferably 25 mass% or less, even more preferably 20 mass% or less, and still more preferably 18 mass% or less of the specific high molecular weight component.

Note that, in the present specification, "molecular weight" of the rubber component refers to the standard polystyrene-converted molecular weight obtained by GPC (gel permeation chromatography). In order to obtain modified styrene-butadiene rubber having a content of the specific high molecular weight component within such a range, it is preferable to control the reaction conditions in the polymerization step and the reaction step described later. For example, in the polymerization step, the amount of the organic monolithium compound used as a polymerization initiator described later may be adjusted. In either the continuous or batch polymerization mode in the polymerization step, it is preferable to use a method having a residence time distribution, that is, to broaden the time distribution of the growth reaction.

In the above modified styrene-butadiene rubber, the molecular weight distribution (Mw/Mn) represented by the ratio of the weight-average molecular weight (Mw) to the number-average molecular weight (Mn) is preferably 1.6 or more and 3.0 or less. When the molecular weight distribution of the modified styrene-butadiene rubber is within this range, the processability of the rubber composition becomes favorable.

The production method of the above modified styrene-butadiene rubber is not particularly limited, but preferably includes a polymerization step in which butadiene and styrene are copolymerized using an organic monolithium compound as a polymerization initiator to obtain a styrene-butadiene copolymer, and a reaction step in which a reactive compound having 5 or more functionalities (hereinafter also referred to as a "coupling agent") is reacted with the active terminal of the styrene-butadiene copolymer.

The above polymerization step is preferably polymerization by a growth reaction via living anionic polymerization, whereby a styrene-butadiene copolymer having an active terminal can be obtained, and a modified styrene-butadiene rubber with a high modification rate can be obtained.

The styrene-butadiene copolymer is obtained by copolymerizing 1,3-butadiene and styrene.

The amount of the organic monolithium compound used as the polymerization initiator is preferably determined according to the molecular weight of the target styrene-butadiene copolymer or modified styrene-butadiene rubber. The amount of monomer such as 1,3-butadiene and styrene relative to the amount of polymerization initiator is related to the degree of polymerization, that is, to the number-average molecular weight and/or weight-average molecular weight. Therefore, to increase the molecular weight, the amount of polymerization initiator may be adjusted in the direction of reduction, and to decrease the molecular weight, the amount of polymerization initiator may be adjusted in the direction of increase.

The organic monolithium compound is preferably an alkyl lithium compound from the viewpoint of industrial availability and ease of control of the polymerization reaction. In this case, a styrene-butadiene copolymer having an alkyl group at the polymerization initiation terminal can be obtained. Examples of the alkyl lithium compound include n-butyl lithium, sec-butyl lithium, tert-butyl lithium, n-hexyl lithium, benzyl lithium, phenyl lithium, and stilbene lithium. Among alkyl lithium compounds, n-butyl lithium and sec-butyl lithium are preferred from the viewpoint of industrial availability and ease of control of the polymerization reaction. These organic monolithium compounds may be used alone or in combination of two or more.

In the above polymerization step, examples of the polymerization reaction mode include batch mode and continuous mode. In the continuous mode, one or two or more connected reactors can be used. As the continuous reactors, for example, tank type with stirrer or tubular type can be used. In the continuous mode, it is preferable that monomer, inert solvent, and polymerization initiator are continuously fed into the reactor, a polymer solution containing the polymer is obtained in the reactor, and the polymer solution is continuously discharged. As the batch reactor, for example, a tank type with stirrer can be used. In the batch mode, it is preferable that monomer, inert solvent, and polymerization initiator are fed, and monomer may be added continuously or intermittently during polymerization as necessary, a polymer solution containing the polymer is obtained in the reactor, and the polymer solution is discharged after completion of polymerization. In the present embodiment, in order to obtain a styrene-butadiene copolymer having a high proportion of active terminals, the continuous mode, which enables continuous discharge of the polymer and supply to the next reaction in a short time, is preferred.

The above polymerization step is preferably performed in an inert solvent. Examples of the solvent include hydrocarbon solvents such as saturated hydrocarbons and aromatic hydrocarbons. Specific examples of hydrocarbon solvents include, but are not limited to, aliphatic hydrocarbons such as butane, pentane, hexane, and heptane; alicyclic hydrocarbons such as cyclopentane, cyclohexane, methylcyclopentane, and methylcyclohexane; aromatic hydrocarbons such as benzene, toluene, and xylene; and mixtures thereof. By treating allenes and acetylenes, which are impurities, with an organometallic compound before use in the polymerization reaction, a styrene-butadiene copolymer having a high concentration of active terminals tends to be obtained, and a modified styrene-butadiene rubber with a high modification rate tends to be obtained, which is therefore preferred.

In the above polymerization step, a polar compound may be added. By adding a polar compound, styrene can be randomly copolymerized with 1,3-butadiene, and the polar compound also tends to be usable as a vinylating agent for controlling the microstructure of the 1,3-butadiene portion.

Examples of the polar compound include, but are not limited to, ethers such as tetrahydrofuran, diethyl ether, dioxane, ethylene glycol dimethyl ether, ethylene glycol dibutyl ether, diethylene glycol dimethyl ether, diethylene glycol dibutyl ether, dimethoxybenzene, and 2,2-bis(2-oxolanyl)propane; tertiary amine compounds such as tetramethylethylenediamine, dipiperidinoethane, trimethylamine, triethylamine, pyridine, and quinuclidine; alkali metal alkoxide compounds such as potassium tert-amylate, potassium tert-butylate, sodium tert-butylate, and sodium amylate; and phosphine compounds such as triphenylphosphine. These polar compounds may be used alone or in combination of two or more.

In the above polymerization step, the polymerization temperature is preferably 0°C or higher from the viewpoint of productivity, more preferably 120°C or lower, and particularly preferably 50°C or higher and 100°C or lower. Within such a range, it tends to be possible to sufficiently secure the amount of reaction of the coupling agent with the active terminal after completion of polymerization.

The amount of bound butadiene in the above styrene-butadiene copolymer or modified styrene-butadiene rubber is not particularly limited, but is preferably 40 mass% or more and 100 mass% or less, and more preferably 55 mass% or more and 80 mass% or less.

Further, the amount of bound styrene in the above styrene-butadiene copolymer or modified styrene-butadiene rubber is not particularly limited, but is preferably more than 0 mass% and 60 mass% or less, and more preferably 20 mass% or more and 45 mass% or less.

When the amount of bound butadiene and the amount of bound styrene are within the above ranges, the low loss property and wear resistance performance of the rubber composition can be further improved.

Note that the amount of bound styrene can be measured by ultraviolet absorption of the phenyl group, and from this, the amount of bound butadiene can also be determined.

In the above-mentioned styrene-butadiene copolymer or modified styrene-butadiene rubber, the vinyl bond content in the butadiene units is not particularly limited, but is preferably 10 mol% or more and 75 mol% or less, and more preferably 20 mol% or more and 65 mol% or less. When the vinyl bond content is within the above range, the low loss property and wear resistance performance of the rubber composition can be further improved.

It should be noted that, for the modified styrene-butadiene rubber, the vinyl bond content (1,2-bond content) in the butadiene units can be determined by the method of Hampton [R. R. Hampton, Analytical Chemistry, 21, 923 (1949)].

The alkoxysilyl group possessed by the coupling agent represented by the above general formula (I) tends, for example, to react with the active terminal of the styrene-butadiene copolymer, causing the alkoxylithium to dissociate and forming a bond between the terminal of the styrene-butadiene copolymer chain and the silicon of the coupling residue. The number of alkoxysilyl groups possessed by the coupling residue is the value obtained by subtracting the number of SiOR groups reduced by the reaction from the total number of SiOR groups possessed by one molecule of the coupling agent. In addition, the azasilacycle group possessed by the coupling agent forms >N-Li bonds and bonds between the terminal of the styrene-butadiene copolymer and the silicon of the coupling residue. It should be noted that the >N-Li bond tends to readily become >NH and LiOH due to water or the like during finishing. Furthermore, the unreacted alkoxysilyl group remaining in the coupling agent tends to readily become silanol (Si-OH group) due to water or the like during finishing.

The reaction temperature in the above reaction step is preferably the same as the polymerization temperature of the styrene-butadiene copolymer, more preferably 0°C or higher and 120°C or lower, and even more preferably 50°C or higher and 100°C or lower. The temperature change from the end of the polymerization step until the coupling agent is added is preferably 10°C or less, and more preferably 5°C or less.

The reaction time in the above reaction step is preferably 10 seconds or more, and more preferably 30 seconds or more. The time from the end of the polymerization step to the start of the reaction step is preferably as short as possible from the viewpoint of coupling rate, and more preferably within 5 minutes.

Mixing in the reaction step may be performed by mechanical stirring, stirring with a static mixer, or the like. When the polymerization step is continuous, it is preferable that the reaction step is also continuous. As the reactor in the reaction step, for example, a tank type or tube type with a stirrer can be used. The coupling agent may be diluted with an inert solvent and continuously supplied to the reactor. When the polymerization step is batch mode, the coupling agent may be added to the polymerization reactor, or the reaction step may be performed by transferring to another reactor.

In the above general formula (I), A is preferably represented by any of the following general formulas (II) to (V). When A is represented by any of the general formulas (II) to (V), a modified styrene-butadiene rubber with even better performance can be obtained.

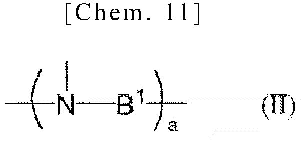

In the above general formula (II), B¹ represents a single bond or a hydrocarbon group having 1 to 20 carbon atoms, and a represents an integer of 1 to 10. When a plurality are present, B¹ may be independently selected for each occurrence.

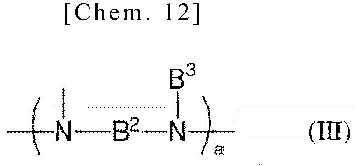

In the above general formula (III), B² represents a single bond or a hydrocarbon group having 1 to 20 carbon atoms, B³ represents an alkyl group having 1 to 20 carbon atoms, and a represents an integer of 1 to 10. When a plurality are present, B² and B³ may be independently selected for each occurrence.

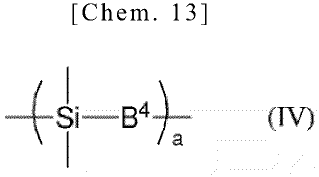

In the above general formula (IV), B⁴ represents a single bond or a hydrocarbon group having 1 to 20 carbon atoms, and a represents an integer of 1 to 10. When a plurality are present, B⁴ may be independently selected for each occurrence.

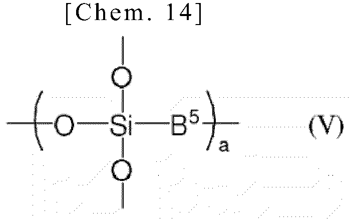

In the above general formula (V), B⁵ represents a single bond or a hydrocarbon group having 1 to 20 carbon atoms, and a represents an integer of 1 to 10. When a plurality are present, B⁵ may be independently selected for each occurrence.

Regarding B¹, B², B⁴, and B⁵ in the above general formulas (II) to (V), examples of hydrocarbon groups having 1 to 20 carbon atoms include alkylene groups having 1 to 20 carbon atoms.

Preferably, in the above general formula (I), A is represented by the above general formula (II) or (III), and k represents 0.

More preferably, in the above general formula (I), A is represented by the above general formula (II) or (III), k represents 0, and in the above general formula (II) or (III), a represents an integer of 2 to 10.

Still more preferably, in the above general formula (I), A is represented by the above general formula (II), k represents 0, and in the above general formula (II), a represents an integer of 2 to 10.

Examples of such coupling agents include bis(3-trimethoxysilylpropyl)-[3-(2,2-dimethoxy-1-aza-2-silacyclopentane)propyl]amine, tris(3-trimethoxysilylpropyl)amine, tris(3-triethoxysilylpropyl)amine, tris(3-trimethoxysilylpropyl)-[3-(2,2-dimethoxy-1-aza-2-silacyclopentane)propyl]-1,3-propanediamine, tetrakis[3-(2,2-dimethoxy-1-aza-2-silacyclopentane)propyl]-1,3-propanediamine, tetrakis(3-trimethoxysilylpropyl)-1,3-propanediamine, tetrakis(3-trimethoxysilylpropyl)-1,3-bisaminomethylcyclohexane, tris(3-trimethoxysilylpropyl)methyl-1,3-propanediamine, bis[3-(2,2-dimethoxy-1-aza-2-silacyclopentane)propyl]-(3-trimethoxysilylpropyl)methyl-1,3-propanediamine, and the like. Among these, tetrakis(3-trimethoxysilylpropyl)-1,3-propanediamine and tetrakis(3-trimethoxysilylpropyl)-1,3-bisaminomethylcyclohexane are particularly preferred.

The amount of the compound represented by the above general formula (I) as the coupling agent to be added can be adjusted so that the molar ratio of the styrene-butadiene copolymer to the coupling agent is reacted at a desired stoichiometric ratio, thereby tending to achieve a desired degree of branching. Specifically, the molar amount of the polymerization initiator is preferably 5.0 times molar or more, more preferably 6.0 times molar or more, relative to the molar amount of the coupling agent. In this case, in the general formula (I), the number of functional groups of the coupling agent ((m - 1) × i + p × j + k) is preferably an integer of 5 to 10, and more preferably an integer of 6 to 10.

In order to obtain a modified styrene-butadiene rubber having the specific polymer component described above, the molecular weight distribution (Mw/Mn) of the styrene-butadiene copolymer is preferably 1.5 or more and 2.5 or less, and more preferably 1.8 or more and 2.2 or less. In addition, it is preferable that a single peak is detected on the molecular weight curve by GPC of the obtained modified styrene-butadiene rubber.

When the peak molecular weight of the modified styrene-butadiene rubber by GPC is Mp₁ and the peak molecular weight of the styrene-butadiene copolymer is Mp₂, it is preferable that the following formula is satisfied: $\left({Mp}_{1}/{Mp}_{2}\right) < 1.8 \times 10 - 12 \times {\left({Mp}_{2}-120\times {10}^{4}\right)}^{2} + 2$

Mp₂ is more preferably 20×10⁴ or more and 80×10⁴ or less, and Mp₁ is more preferably 30×10⁴ or more and 150×10⁴ or less. Mp₁ and Mp₂ are determined by the method described in the examples below.

The modification rate of the above modified styrene-butadiene rubber is preferably 30 mass% or more, more preferably 50 mass% or more, and even more preferably 70 mass% or more. When the modification rate is 30 mass% or more, the low loss property and wear resistance performance of the rubber composition can be further improved.

After the above reaction step, a deactivator, neutralizer, or the like may be added to the copolymer solution as necessary. Examples of the deactivator are not limited to the following, but include, for example, water; alcohols such as methanol, ethanol, isopropanol, and the like. Examples of the neutralizer are not limited to the following, but include, for example, carboxylic acids such as stearic acid, oleic acid, versatic acid (a highly branched mixture of carboxylic acids having 9 to 11 carbon atoms, centered on 10); aqueous solutions of inorganic acids, carbon dioxide gas, and the like.

In addition, from the viewpoint of preventing gel formation after polymerization and improving stability during processing, it is preferable to add an antioxidant such as, for example, 2,6-di-tert-butyl-4-hydroxytoluene (BHT), n-octadecyl-3-(4'-hydroxy-3',5'-di-tert-butylphenyl)propionate, 2-methyl-4,6-bis[(octylthio)methyl]phenol, or the like to the modified styrene-butadiene rubber.

As a method for obtaining the above modified styrene-butadiene rubber from the polymer solution, a known method can be used. Examples of such methods include: a method in which, after separating the solvent by steam stripping or the like, the polymer is filtered, further dehydrated and dried to obtain the polymer; a method in which the solution is concentrated in a flashing tank and further devolatilized with a vented extruder or the like; and a method in which the solution is directly devolatilized with a drum dryer or the like.

The modified styrene-butadiene rubber obtained by reacting the coupling agent represented by the above general formula (I) with the styrene-butadiene copolymer is represented, for example, by the following general formula (VI).

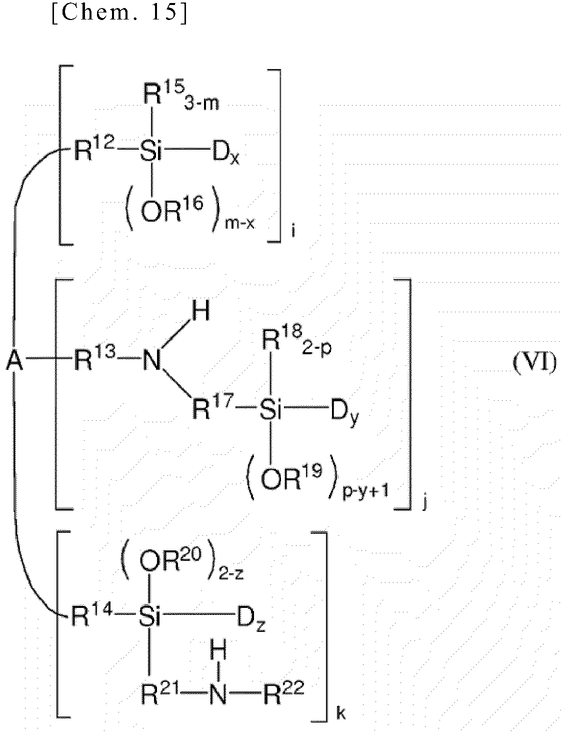

In the general formula (VI), D represents a styrene-butadiene copolymer chain, and the weight-average molecular weight of the styrene-butadiene copolymer chain is preferably 10×10⁴ to 100×10⁴. The styrene-butadiene copolymer chain is a constituent unit of the modified styrene-butadiene rubber, and is, for example, a structural unit derived from the styrene-butadiene copolymer generated by reacting the styrene-butadiene copolymer with the coupling agent.

R¹², R¹³, and R¹⁴ each independently represent a single bond or an alkylene group having 1 to 20 carbon atoms.

R¹⁵ and R¹⁸ each independently represent an alkyl group having 1 to 20 carbon atoms.

R¹⁶, R¹⁹, and R²⁰ each independently represent a hydrogen atom or an alkyl group having 1 to 20 carbon atoms.

R¹⁷ and R²¹ each independently represent an alkylene group having 1 to 20 carbon atoms.

R²² represents a hydrogen atom or an alkyl group having 1 to 20 carbon atoms.

m and x each represent an integer of 1 to 3, x ≤ m, p represents 1 or 2, y represents an integer of 1 to 3, y ≤ (p+1), and z represents an integer of 1 or 2.

When a plurality of D, R¹² to R²², m, p, x, y, and z are present, each may be independently selected and may be the same or different.

Further, i represents an integer of 0 to 6, j represents an integer of 0 to 6, k represents an integer of 0 to 6, i + j + k is an integer of 3 to 10, and (x×i) + (y×j) + (z×k) is an integer of 5 to 30.

"A" represents a hydrocarbon group having 1 to 20 carbon atoms, or an organic group having at least one atom selected from the group consisting of an oxygen atom, a nitrogen atom, a silicon atom, a sulfur atom, and a phosphorus atom, and not having an active hydrogen. The hydrocarbon group represented by A encompasses saturated, unsaturated, aliphatic, and aromatic hydrocarbon groups. Examples of the organic group not having an active hydrogen include organic groups not having a functional group with active hydrogen, such as a hydroxyl group (-OH), secondary amino group (>NH), primary amino group (-NH₂), or sulfhydryl group (-SH).

In the above general formula (VI), it is preferable that A is represented by any of the above general formulas (II) to (V). When A is represented by any of the general formulas (II) to (V), the low loss property and wear resistance performance of the rubber composition can be further improved.

### --- Third Preferred Embodiment of Modified Styrene-Butadiene Rubber ---

It is also preferable that the above styrene-butadiene rubber (SBR) is modified with a modifier containing a compound (alkoxysilane) represented by the following general formula (1), in which at least one terminal is modified.

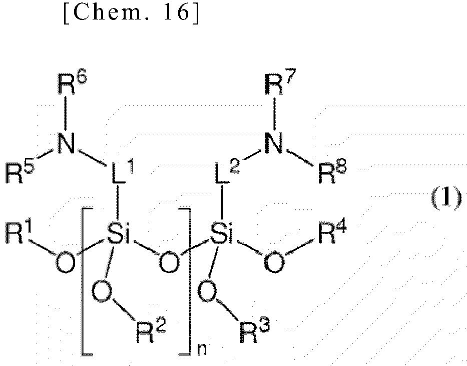

By using, as the rubber component (A), styrene-butadiene rubber modified with a modifier containing a compound represented by the above general formula (1) including an oligosiloxane and a tertiary amino group, which are filler-affinity functional groups, the dispersibility of fillers such as silica can be enhanced. As a result, since the dispersibility of the filler is improved in the rubber composition of the present disclosure, the low loss property is greatly improved, the rolling resistance of a tire using the rubber composition can be reduced, and the fuel efficiency performance can be improved.

In the above general formula (1), R¹ to R⁸ each independently represent an alkyl group having 1 to 20 carbon atoms; L¹ and L² each independently represent an alkylene group having 1 to 20 carbon atoms; and n is an integer of 2 to 4.

Specifically, in formula (1), R¹ to R⁴ may each independently be a substituted or unsubstituted alkyl group having 1 to 20 carbon atoms, and when R¹ to R⁴ are substituted, they may each independently be substituted with one or more substituents selected from the group consisting of an alkyl group having 1 to 10 carbon atoms, a cycloalkyl group having 3 to 10 carbon atoms, an alkoxy group having 1 to 10 carbon atoms, a cycloalkoxy group having 4 to 10 carbon atoms, an aryl group having 6 to 12 carbon atoms, an aryloxy group having 6 to 12 carbon atoms, an alkanoyloxy group having 2 to 12 carbon atoms (Ra-COO-, where Ra is an alkyl group having 1 to 9 carbon atoms), an aralkyloxy group having 7 to 13 carbon atoms, an arylalkyl group having 7 to 13 carbon atoms, and an alkylaryl group having 7 to 13 carbon atoms.

More specifically, R¹ to R⁴ may each independently be a substituted or unsubstituted alkyl group having 1 to 10 carbon atoms, and even more specifically, R¹ to R⁴ may each independently be a substituted or unsubstituted alkyl group having 1 to 6 carbon atoms.

In addition, in formula (1), R⁵ to R⁸ each independently represent a substituted or unsubstituted alkyl group having 1 to 20 carbon atoms, specifically, a substituted or unsubstituted alkyl group having 1 to 10 carbon atoms, and even more specifically, a substituted or unsubstituted alkyl group having 1 to 6 carbon atoms, and when substituted, may be substituted with a substituent as described above for R¹ to R⁴.

It should be noted that, if R⁵ to R⁸ are not alkyl groups but hydrolyzable substituents, the N-R⁵R⁶ and N-R⁷R⁸ bonds may be hydrolyzed to N-H in the presence of moisture, which may adversely affect the processability of the polymer.

More specifically, in the compound represented by formula (1), R¹ to R⁴ may be methyl or ethyl groups, and R⁵ to R⁸ may be alkyl groups having 1 to 10 carbon atoms.

The amino groups in the compound represented by formula (1), i.e., N-R⁵R⁶ and N-R⁷R⁸, are preferably tertiary amino groups. The tertiary amino group allows the compound represented by formula (1), when used as a modifier, to provide even better processability.

It should be noted that, when a protecting group for the amino group is bonded to R⁵ to R⁸, or when hydrogen is bonded, the effect of the compound represented by formula (1) may be difficult to realize. When hydrogen is bonded, the anion in the modification process reacts with the hydrogen and loses reactivity, making the modification reaction itself impossible, and when a protecting group is bonded, the modification reaction proceeds, but the protecting group is removed by hydrolysis during post-processing, resulting in a primary or secondary amino group. The deprotected primary or secondary amino group may subsequently cause an increase in viscosity of the compound during compounding, leading to a decrease in processability.

In addition, L¹ and L² in the compound represented by formula (1) each independently represent a substituted or unsubstituted alkylene group having 1 to 20 carbon atoms.

More specifically, L¹ and L² may each independently be an alkylene group having 1 to 10 carbon atoms, and even more specifically, an alkylene group having 1 to 6 carbon atoms such as a methylene group, ethylene group, or propylene group.

Regarding L¹ and L² in the compound represented by formula (1), the closer the distance between the Si atom and the N atom in the molecule, the more excellent the effect. However, when Si is directly bonded to N, the bond between Si and N may be cleaved during subsequent processing steps, and the secondary amino group generated at this time is highly likely to be washed away by water during post-processing, making it difficult for the amino group to promote bonding with fillers such as silica in the produced modified styrene-butadiene rubber, and as a result, the effect of improving the dispersibility of the filler may be reduced. Considering the improvement effect due to the bond length between Si and N, it is more preferable that L¹ and L² each independently represent an alkylene group having 1 to 3 carbon atoms such as a methylene group, ethylene group, or propylene group, and more specifically, may be a propylene group. In addition, L¹ and L² may be substituted with a substituent as described above for R¹ to R⁴.

Furthermore, the compound represented by formula (1) is preferably any one of the compounds represented by the following structural formulas (1-1) to (1-5). This is because even better low loss property can be achieved.

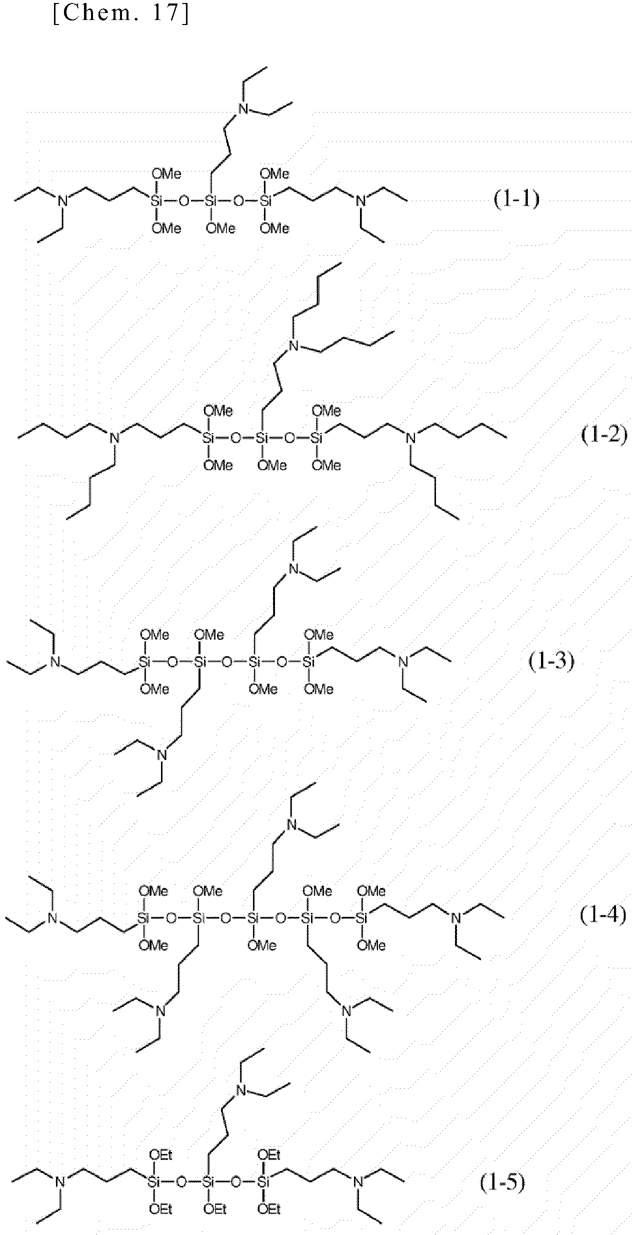

The compound represented by formula (1) has an alkoxysilane structure that bonds to the active terminal of the styrene-butadiene copolymer, while the Si-O-Si structure and three or more amino groups bonded to the terminal exhibit affinity for fillers such as silica, thereby, as compared to conventional modifiers containing a single amino group within the molecule, promoting the bonding between the filler and the modified styrene-butadiene rubber. In addition, the degree of bonding of the active terminal of the styrene-butadiene copolymer is uniform, and when observing the change in molecular weight distribution before and after coupling, the molecular weight distribution remains constant after coupling without increasing compared to before. Therefore, there is no deterioration in the physical properties of the modified styrene-butadiene rubber itself, aggregation of the filler in the rubber composition is prevented, and the dispersibility of the filler can be enhanced, thereby improving the processability of the rubber composition. These effects, in particular, make it possible to improve the balance between high fuel efficiency and wet gripping performance when the rubber composition is applied to a tire.

The compound represented by formula (1) can be produced through a condensation reaction represented by the following reaction scheme.

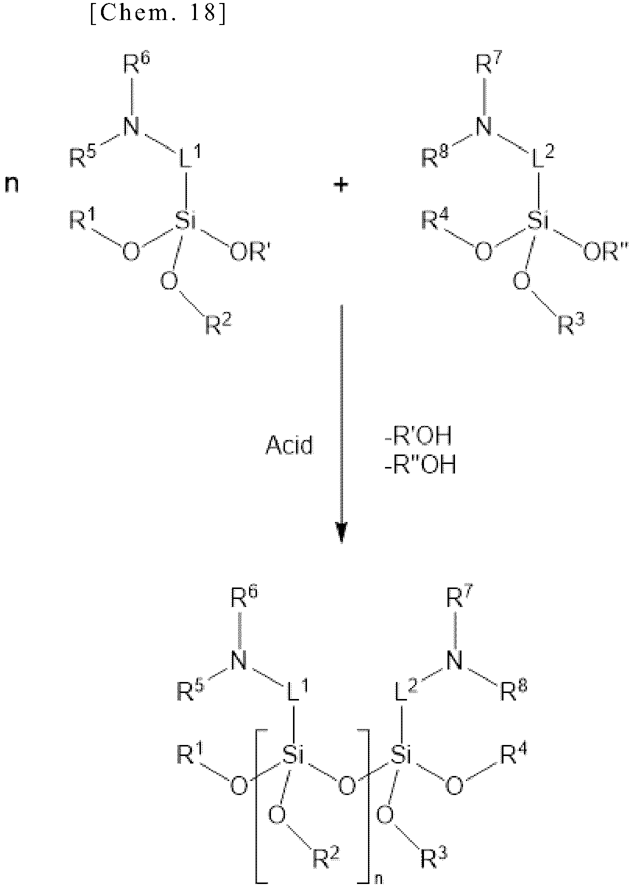

In the above reaction scheme, R¹ to R⁸, L¹ and L², and n are as defined in the aforementioned formula (1), and R' and R" are arbitrary substituents that do not affect the condensation reaction. For example, R' and R" may each independently be the same as any one of R¹ to R⁴.

The reaction of the above reaction scheme proceeds in the presence of an acid, and the acid may be used without limitation as long as it is generally used in condensation reactions. Those skilled in the art can select the optimal acid according to various process variables such as the type of reactor in which the reaction is carried out, starting materials, reaction temperature, and the like.

The modified styrene-butadiene rubber modified with a modifier containing the compound represented by formula (1) can have a narrow molecular weight distribution (Mw/Mn, also referred to as "polydispersity index (PDI)") of 1.1 to 3.0. If the molecular weight distribution of the modified styrene-butadiene rubber exceeds 3.0 or is less than 1.1, there is a risk that the tensile properties and viscoelasticity may decrease when applied to a rubber composition. Considering the remarkable effect of improving tensile properties and viscoelasticity by controlling the molecular weight distribution of the modified styrene-butadiene rubber, the molecular weight distribution of the modified styrene-butadiene rubber is preferably in the range of 1.3 to 2.0. The modified styrene-butadiene rubber, by using the above modifier, has a molecular weight distribution similar to that of the styrene-butadiene copolymer before modification.

The molecular weight distribution of the modified styrene-butadiene rubber can be calculated from the ratio (Mw/Mn) of the weight-average molecular weight (Mw) to the number-average molecular weight (Mn). In this case, the number-average molecular weight (Mn) is the common average of the individual polymer molecular weights calculated by measuring the molecular weights of n polymer molecules, summing these molecular weights, and dividing by n, and the weight-average molecular weight (Mw) represents the molecular weight distribution of the polymer composition. The average molecular weight of the whole can be expressed in grams per mole (g/mol).

In addition, the weight-average molecular weight and number-average molecular weight are each polystyrene-equivalent molecular weights analyzed by gel permeation chromatography (GPC).

The modified styrene-butadiene rubber, while satisfying the above molecular weight distribution conditions, may have a number-average molecular weight (Mn) of 50,000 g/mol to 2,000,000 g/mol, and more specifically, 200,000 g/mol to 800,000 g/mol. The modified styrene-butadiene rubber may have a weight-average molecular weight (Mw) of 100,000 g/mol to 4,000,000 g/mol, and more specifically, 300,000 g/mol to 1,500,000 g/mol.

If the weight-average molecular weight (Mw) of the modified styrene-butadiene rubber is less than 100,000 g/mol or the number-average molecular weight (Mn) is less than 50,000 g/mol, there is a risk of deterioration in tensile properties when applied to a rubber composition. On the other hand, if the weight-average molecular weight (Mw) exceeds 4,000,000 g/mol or the number-average molecular weight (Mn) exceeds 2,000,000 g/mol, the processability of the modified styrene-butadiene rubber decreases, resulting in poor operability of the rubber composition, making kneading difficult, and it may also become difficult to sufficiently improve the physical properties of the rubber composition.

More specifically, when the modified styrene-butadiene rubber simultaneously satisfies the conditions for the weight-average molecular weight (Mw) and number-average molecular weight (Mn) together with the molecular weight distribution, the viscoelasticity and processability of the rubber composition can be improved in a well-balanced manner when applied to a rubber composition.

The modified styrene-butadiene rubber preferably has a vinyl bond content in the butadiene portion of 5% or more, more preferably 10% or more, and preferably 60% or less. By setting the vinyl bond content in the butadiene portion within the above range, the glass transition temperature can be adjusted to an appropriate range.

The modified styrene-butadiene rubber may have a Mooney viscosity (MV) at 100°C of 40 to 140, specifically 60 to 100. When the Mooney viscosity is within the above range, more excellent processability can be exhibited.

The Mooney viscosity can be measured using a Mooney viscometer, for example, the MV2000E from Monsanto, at 100°C, rotor speed 2 ± 0.02 rpm, using a large rotor. The sample used at this time is left at room temperature (23 ± 3°C) for 30 minutes or more, then 27 ± 3 g is taken, filled into the die cavity, and the platen is operated to perform the measurement.

As described above, it is preferable that one terminal of the modified styrene-butadiene rubber is modified with a modifier containing the compound represented by general formula (1), and it is further preferable that the other terminal is further modified with a modifier containing a compound represented by general formula (2) below. By modifying both terminals of the modified styrene-butadiene rubber, the dispersibility of the filler in the rubber composition is further improved, and both high fuel efficiency and wet gripping performance of a tire using the rubber composition can be achieved at a higher level.

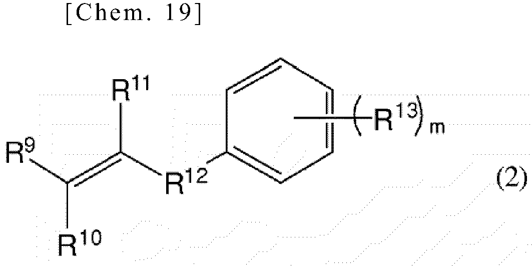

In the above general formula (2), R⁹ to R¹¹ are each independently hydrogen; an alkyl group having 1 to 30 carbon atoms; an alkenyl group having 2 to 30 carbon atoms; an alkynyl group having 2 to 30 carbon atoms; a heteroalkyl group having 1 to 30 carbon atoms; a heteroalkenyl group having 2 to 30 carbon atoms; a heteroalkynyl group having 2 to 30 carbon atoms; a cycloalkyl group having 5 to 30 carbon atoms; an aryl group having 6 to 30 carbon atoms; or a heterocyclic group having 3 to 30 carbon atoms.

Further, in formula (2), R¹² is a single bond; a substituted or unsubstituted alkylene group having 1 to 20 carbon atoms; a substituted or unsubstituted cycloalkylene group having 5 to 20 carbon atoms; or a substituted or unsubstituted arylene group having 5 to 20 carbon atoms, wherein the substituent is an alkyl group having 1 to 10 carbon atoms, a cycloalkyl group having 5 to 10 carbon atoms, or an aryl group having 6 to 20 carbon atoms.

Further, in formula (2), R¹³ is an alkyl group having 1 to 30 carbon atoms; an alkenyl group having 2 to 30 carbon atoms; an alkynyl group having 2 to 30 carbon atoms; a heteroalkyl group having 1 to 30 carbon atoms; a heteroalkenyl group having 2 to 30 carbon atoms; a heteroalkynyl group having 2 to 30 carbon atoms; a cycloalkyl group having 5 to 30 carbon atoms; an aryl group having 6 to 30 carbon atoms; a heterocyclic group having 3 to 30 carbon atoms; or a functional group represented by the following general formula (2a) or general formula (2b), where m is an integer of 1 to 5, and at least one of the R¹³ is a functional group represented by general formula (2a) or general formula (2b), and when m is an integer of 2 to 5, a plurality of R¹³ may be the same or different from each other.

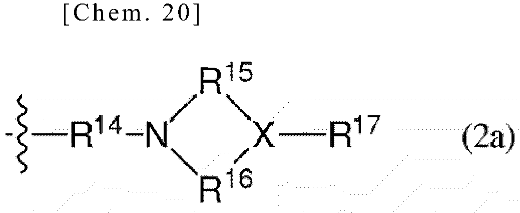

In the above general formula (2a), R¹⁴ is a substituted or unsubstituted alkylene group having 1 to 20 carbon atoms; a substituted or unsubstituted cycloalkylene group having 5 to 20 carbon atoms; or a substituted or unsubstituted arylene group having 6 to 20 carbon atoms, wherein the substituent is an alkyl group having 1 to 10 carbon atoms, a cycloalkyl group having 5 to 10 carbon atoms, or an aryl group having 6 to 20 carbon atoms.

Further, in formula (2a), R¹⁵ and R¹⁶ are each independently a substituted or unsubstituted alkylene group having 1 to 20 carbon atoms, substituted with an alkyl group having 1 to 10 carbon atoms, a cycloalkyl group having 5 to 10 carbon atoms, or an aryl group having 6 to 20 carbon atoms, or unsubstituted.

Further, in formula (2a), R¹⁷ is hydrogen; an alkyl group having 1 to 30 carbon atoms; an alkenyl group having 2 to 30 carbon atoms; an alkynyl group having 2 to 30 carbon atoms; a heteroalkyl group having 1 to 30 carbon atoms; a heteroalkenyl group having 2 to 30 carbon atoms; a heteroalkynyl group having 2 to 30 carbon atoms; a cycloalkyl group having 5 to 30 carbon atoms; an aryl group having 6 to 30 carbon atoms; or a heterocyclic group having 3 to 30 carbon atoms, and X is an N, O, or S atom, provided that when X is O or S, R¹⁷ is absent.

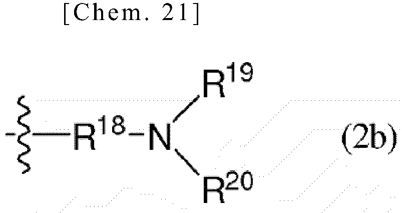

In the above general formula (2b), R¹⁸ is a substituted or unsubstituted alkylene group having 1 to 20 carbon atoms; a substituted or unsubstituted cycloalkylene group having 5 to 20 carbon atoms; or a substituted or unsubstituted arylene group having 6 to 20 carbon atoms, wherein the substituent is an alkyl group having 1 to 10 carbon atoms, a cycloalkyl group having 5 to 10 carbon atoms, or an aryl group having 6 to 20 carbon atoms.

Further, in formula (2b), R¹⁹ and R²⁰ are each independently an alkyl group having 1 to 30 carbon atoms; an alkenyl group having 2 to 30 carbon atoms; an alkynyl group having 2 to 30 carbon atoms; a heteroalkyl group having 1 to 30 carbon atoms; a heteroalkenyl group having 2 to 30 carbon atoms; a heteroalkynyl group having 2 to 30 carbon atoms; a cycloalkyl group having 5 to 30 carbon atoms; an aryl group having 6 to 30 carbon atoms; or a heterocyclic group having 3 to 30 carbon atoms.

In addition, in the compound represented by the above general formula (2), R⁹ to R¹¹ are each independently hydrogen; an alkyl group having 1 to 10 carbon atoms; an alkenyl group having 2 to 10 carbon atoms; or an alkynyl group having 2 to 10 carbon atoms, R¹² is a single bond or an unsubstituted alkylene group having 1 to 10 carbon atoms, and R¹³ is an alkyl group having 1 to 10 carbon atoms; an alkenyl group having 2 to 10 carbon atoms; an alkynyl group having 2 to 10 carbon atoms; or a functional group represented by the above general formula (2a) or general formula (2b), wherein in the above general formula (2a), R¹⁴ is an unsubstituted alkylene group having 1 to 10 carbon atoms, R¹⁵ and R¹⁶ are each independently an unsubstituted alkylene group having 1 to 10 carbon atoms, R¹⁷ is an alkyl group having 1 to 10 carbon atoms; a cycloalkyl group having 5 to 20 carbon atoms; an aryl group having 6 to 20 carbon atoms; or a heterocyclic group having 3 to 20 carbon atoms, and in the above general formula (2b), R¹⁸ is an unsubstituted alkylene group having 1 to 10 carbon atoms, and R¹⁹ and R²⁰ are each independently an alkyl group having 1 to 10 carbon atoms; a cycloalkyl group having 5 to 20 carbon atoms; an aryl group having 6 to 20 carbon atoms; or a heterocyclic group having 3 to 20 carbon atoms.

More specifically, the compound represented by the above general formula (2) may be a compound represented by the following structural formulas (2-1) to (2-3).

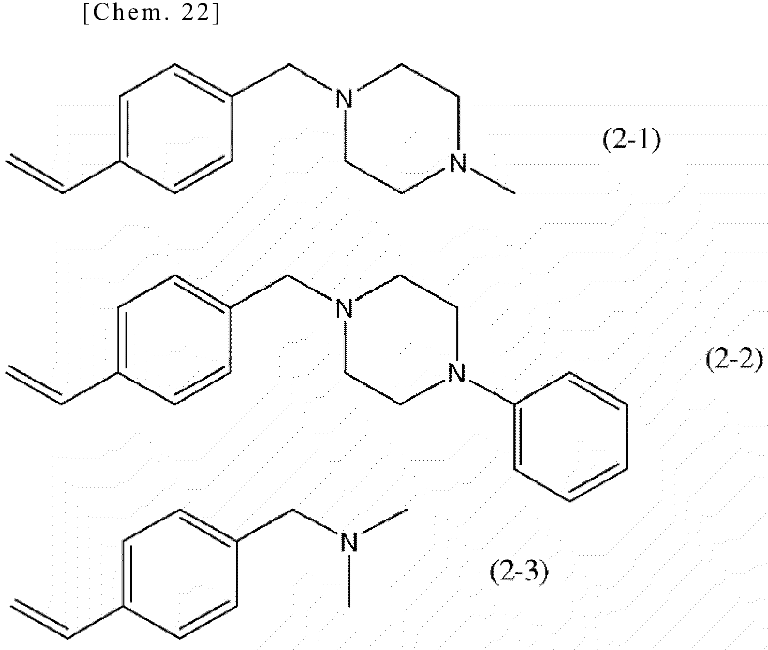

When the styrene-butadiene copolymer is modified with a modifier containing a compound represented by the above general formula (2), the modifier containing the compound represented by formula (2) is used as a modification initiator.

Specifically, for example, by polymerizing a butadiene monomer and a styrene monomer in a hydrocarbon solvent in the presence of a modifier containing a compound represented by formula (2), a modification group derived from the compound represented by formula (2) can be introduced into the styrene-butadiene copolymer.

### -- Butadiene Rubber (BR) --

The synthetic rubber (A2) preferably also contains butadiene rubber (BR). Butadiene rubber has a low glass transition temperature (Tg), and by including butadiene rubber as the synthetic rubber (A2) in the rubber component (A), the high fuel efficiency and wear resistance performance of a tire using the rubber composition can be improved.

The butadiene rubber may be modified or unmodified.

From the viewpoint of further improving the high fuel efficiency and wear resistance performance of a tire using the rubber composition, it is preferable that the butadiene rubber is modified butadiene rubber having a functional group with affinity for the filler.

Examples of the functional group having affinity for the filler include a functional group having at least one atom selected from a nitrogen atom, an oxygen atom, a sulfur atom, a metalloid atom, and a metal atom.

As the metalloid atom, at least one atom selected from boron, silicon, germanium, arsenic, antimony, and tellurium is preferable, at least one atom selected from boron, silicon, and germanium is more preferable, and silicon is particularly preferable.

As the metal atom, at least one atom selected from tin, titanium, zirconium, bismuth, and aluminum is preferable, least one atom selected from tin and titanium is more preferable, and tin is particularly preferable.

The functional group having affinity for the filler preferably contains at least one selected from the group consisting of a nitrogen atom, an oxygen atom, and a silicon atom.

The functional group having at least one atom selected from a nitrogen atom, an oxygen atom, a sulfur atom, a metalloid atom, and a metal atom is a residual group of a compound having at least one atom selected from a nitrogen atom, an oxygen atom, a sulfur atom, a metalloid atom, and a metal atom (hereinafter, sometimes referred to as a "hetero atom-containing compound").

The modified butadiene rubber may, for example, be obtained by polymerizing 1,3-butadiene to obtain polybutadiene having an active terminal, and reacting the active terminal of the polybutadiene with a modifier, or by polymerizing 1,3-butadiene using a polymerization initiator having a functional group to obtain polybutadiene having a functional group at the polymerization initiation terminal.

For example, the hetero atom-containing compound may react with the active terminal of polybutadiene as a modifier to form modified butadiene rubber, or a nitrogen-containing compound as a hetero atom-containing compound may react with an alkali metal to form a polymerization initiator for anionic polymerization, and form modified butadiene rubber having a nitrogen-containing compound residual group at the polymerization initiation terminal of polybutadiene.

Examples of the modifier that reacts with the active terminal of polybutadiene include at least one modifier selected from tin-containing compounds, nitrogen and silicon-containing compounds, oxygen and silicon-containing compounds, sulfur and silicon-containing compounds, and nitrogen-containing compounds not containing silicon.

Examples of the tin-containing compound include at least one tin compound selected from tin tetrachloride and tributyltin chloride.

Examples of the nitrogen and silicon-containing compounds include silane compounds having a protected primary amino group, such as N,N-bis(trimethylsilyl)aminopropylmethyldimethoxysilane, 1-trimethylsilyl-2,2-dimethoxy-1-aza-2-silacyclopentane, N,N-bis(trimethylsilyl)aminopropyltrimethoxysilane, N,N-bis(trimethylsilyl)aminopropyltriethoxysilane, N,N-bis(trimethylsilyl)aminopropylmethyldiethoxysilane, N,N-bis(trimethylsilyl)aminoethyltrimethoxysilane, N,N-bis(trimethylsilyl)aminoethyltriethoxysilane, N,N-bis(trimethylsilyl)aminoethylmethyldimethoxysilane, and N,N-bis(trimethylsilyl)aminoethylmethyldiethoxysilane; and silane compounds having a protected secondary amino group, such as N-methyl-N-trimethylsilylaminopropyl(methyl)dimethoxysilane, N-methyl-N-trimethylsilylaminopropyl(methyl)diethoxysilane, N-trimethylsilyl(hexamethyleneimine-2-yl)propyl(methyl)dimethoxysilane, N-trimethylsilyl(hexamethyleneimine-2-yl)propyl(methyl)diethoxysilane, N-trimethylsilyl(pyrrolidine-2-yl)propyl(methyl)dimethoxysilane, N-trimethylsilyl(pyrrolidine-2-yl)propyl(methyl)diethoxysilane, N-trimethylsilyl(piperidine-2-yl)propyl(methyl)dimethoxysilane, N-trimethylsilyl(piperidine-2-yl)propyl(methyl)diethoxysilane, N-trimethylsilyl(imidazole-2-yl)propyl(methyl)dimethoxysilane, N-trimethylsilyl(imidazole-2-yl)propyl(methyl)diethoxysilane, N-trimethylsilyl(4,5-dihydroimidazole-5-yl)propyl(methyl)dimethoxysilane, and N-trimethylsilyl(4,5-dihydroimidazole-5-yl)propyl(methyl)diethoxysilane.

Examples of the oxygen and silicon-containing compounds include at least one epoxy group-containing hydrocarbyloxy silane compound selected from 2-glycidoxyethyltrimethoxysilane, 2-glycidoxyethyltriethoxysilane, (2-glycidoxyethyl)methyldimethoxysilane, 3-glycidoxypropyltrimethoxysilane, 3-glycidoxypropyltriethoxysilane, (3-glycidoxypropyl)methyldimethoxysilane, 2-(3,4-epoxycyclohexyl)ethyltrimethoxysilane, 2-(3,4-epoxycyclohexyl)ethyltriethoxysilane, and 2-(3,4-epoxycyclohexyl)ethyl(methyl)dimethoxysilane.

Examples of the sulfur and silicon-containing compounds include thioepoxy group-containing hydrocarbyloxy silane compounds in which the epoxy group of the above epoxy group-containing hydrocarbyloxy silane compound is replaced with a thioepoxy group.

As examples of the above-mentioned nitrogen-containing compounds not containing silicon, compounds selected from one or more of bis(diethylamino)benzophenone, dimethylimidazolidinone, N-methylpyrrolidone, and 4-dimethylaminobenzylideneaniline are suitably exemplified.

As the polymerization method for the above-mentioned polybutadiene, either anionic polymerization or coordination polymerization may be employed.

When the above-mentioned polybutadiene is obtained by anionic polymerization, an alkali metal compound is used as the polymerization initiator, with a lithium compound being preferred. There is no particular limitation on the lithium compound as the polymerization initiator, but hydrocarbyl lithium and lithium amide compounds are preferably used. When the former, hydrocarbyl lithium, is used, polybutadiene having a hydrocarbyl group at the polymerization initiation terminal and a polymerization active site at the other terminal is obtained. When the latter, lithium amide compound, is used, polybutadiene having a nitrogen-containing functional group at the polymerization initiation terminal and a polymerization active site at the other terminal is obtained.

As the above-mentioned hydrocarbyl lithium, those having a hydrocarbyl group with 2 to 20 carbon atoms are preferred. Examples include ethyl lithium, n-propyl lithium, isopropyl lithium, n-butyl lithium, sec-butyl lithium, tert-octyl lithium, n-decyl lithium, phenyl lithium, 2-naphthyl lithium, 2-butylphenyl lithium, 4-phenylbutyl lithium, cyclohexyl lithium, cyclopentyl lithium, and the reaction product of diisopropenylbenzene and butyl lithium. Among these, n-butyl lithium is particularly preferred.

As the above-mentioned lithium amide compounds, examples include lithium hexamethyleneimide, lithium pyrrolidide, lithium piperidide, lithium heptamethyleneimide, lithium dodecamethyleneimide, lithium dimethylamide, lithium diethylamide, lithium dibutylamide, lithium dipropylamide, lithium diheptylamide, lithium dihexylamide, lithium dioctylamide, lithium di-2-ethylhexylamide, lithium didecylamide, lithium-N-methylpiperazide, lithium ethylpropylamide, lithium ethylbutylamide, lithium ethylbenzylamide, and lithium methylphenethylamide. Among these, from the viewpoint of interaction effect with carbon black and polymerization initiation ability, cyclic lithium amides such as lithium hexamethyleneimide, lithium pyrrolidide, lithium piperidide, lithium heptamethyleneimide, and lithium dodecamethyleneimide are preferred, with lithium hexamethyleneimide and lithium pyrrolidide being more preferred.

When lithium hexamethyleneimide is used as the polymerization initiator, a modified butadiene rubber having a hexamethyleneimino group, which is a nitrogen-containing compound residual group as a functional group containing atoms other than carbon and hydrogen, at the polymerization initiation terminal of the polybutadiene can be obtained, which is further preferred.

A modified butadiene rubber having a nitrogen-containing compound residual group at the polymerization initiation terminal of the polybutadiene and, at the active terminal of the polybutadiene, one or more compound residual groups selected from tin-containing compound residual groups, nitrogen- and silicon-containing compound residual groups, oxygen- and silicon-containing compound residual groups, sulfur- and silicon-containing compound residual groups, and nitrogen-containing compound residual groups not containing silicon, is further preferred from the viewpoint of further reducing the rolling resistance of the tire, exhibiting excellent fuel efficiency, and further improving wear resistance and crack resistance.

There is no particular limitation on the method for producing polybutadiene by anionic polymerization using the above-mentioned lithium compound as the polymerization initiator, and conventionally known methods can be used.

Specifically, in a hydrocarbon solvent such as an aliphatic, alicyclic, or aromatic hydrocarbon compound, which is inert to the reaction, 1,3-butadiene is subjected to anionic polymerization using the above-mentioned lithium compound as the polymerization initiator, optionally in the presence of a randomizer, to obtain the desired polybutadiene.

As the hydrocarbon solvent, those having 3 to 8 carbon atoms are preferred, and examples include propane, n-butane, isobutane, n-pentane, isopentane, n-hexane, cyclohexane, propene, 1-butene, isobutene, trans-2-butene, cis-2-butene, 1-pentene, 2-pentene, 1-hexene, 2-hexene, benzene, toluene, xylene, and ethylbenzene. These may be used alone or in combination of two or more.

The randomizer, which may be used as desired, refers to a compound having an effect of controlling the microstructure of polybutadiene, for example, increasing 1,2-bonds in polybutadiene. There is no particular limitation on the randomizer, and any known compound generally used as a randomizer may be appropriately selected and used. Specific examples include ethers and tertiary amines such as dimethoxybenzene, tetrahydrofuran, dimethoxyethane, diethylene glycol dibutyl ether, diethylene glycol dimethyl ether, 2,2-bis(2-tetrahydrofuryl)propane, triethylamine, pyridine, N-methylmorpholine, N,N,N',N'-tetramethylethylenediamine, and 1,2-dipiperidinoethane. Potassium salts such as potassium tert-amylate and potassium tert-butoxide, and sodium salts such as sodium tert-amylate, may also be used. These randomizers may be used alone or in combination of two or more. The amount of randomizer used is preferably selected in the range of 0.01 to 1000 molar equivalents per 1 mol of lithium compound.

The temperature in the above-mentioned polymerization reaction is preferably selected in the range of 0°C to 150°C, more preferably 20°C to 130°C. The polymerization reaction can be carried out under the pressure generated, but it is usually desirable to operate at a pressure sufficient to keep the monomer 1,3-butadiene substantially in the liquid phase. That is, the pressure depends on the individual substances to be polymerized, the polymerization medium used, the polymerization temperature, etc., but if desired, a higher pressure may be used, and such pressure can be obtained by an appropriate method such as pressurizing the reactor with a gas inert to the polymerization reaction.

On the other hand, when producing the above-mentioned polybutadiene by coordination polymerization using a rare earth metal compound as the polymerization initiator, it is further preferred to use a combination of the following (a) component, (b) component, and (c) component.

The (a) component used in the above-mentioned coordination polymerization is selected from rare earth metal compounds and complexes of rare earth metal compounds with Lewis bases. Here, as the rare earth metal compound, carboxylates, alkoxides, β-diketone complexes, phosphates, and phosphonates of rare earth elements may be mentioned. As the Lewis base, acetylacetone, tetrahydrofuran, pyridine, N,N-dimethylformamide, thiophene, diphenyl ether, triethylamine, organic phosphorus compounds, and monovalent or divalent alcohols may be mentioned. As the rare earth element in the above-mentioned rare earth metal compound, lanthanum, neodymium, praseodymium, samarium, and gadolinium are preferred, with neodymium being particularly preferred among these. Specific examples of the (a) component include neodymium tri-2-ethylhexanoate, its complex with acetylacetone, neodymium trineodecanoate, its complex with acetylacetone, and neodymium tri-n-butoxide. These (a) components may be used alone or in combination of two or more.

The (b) component used in the coordination polymerization is selected from organic aluminum compounds. Specific examples of the organic aluminum compound include trialkylaluminum compounds represented by the formula: R₃Al, hydrocarbyl aluminum hydrides represented by the formula: R₂AlH or RAlH₂ (wherein R is independently a hydrocarbon group having 1 to 30 carbon atoms), and hydrocarbyl aluminoxane compounds having a hydrocarbon group with 1 to 30 carbon atoms. Specific examples of the organic aluminum compound include trialkyl aluminum, dialkyl aluminum hydride, alkyl aluminum dihydride, and alkyl aluminoxane. These compounds may be used alone or in combination of two or more. It is preferable to use aluminoxane in combination with another organic aluminum compound as the (b) component.

The (c) component used in the coordination polymerization is selected from compounds having a hydrolyzable halogen or complexes thereof with Lewis bases; organic halides having a tertiary alkyl halide, benzyl halide, or allyl halide; and ionic compounds composed of a non-coordinating anion and a counter cation. Specific examples of such (c) components include alkyl aluminum dichloride, dialkyl aluminum chloride, silicon tetrachloride, tin tetrachloride, complexes of zinc chloride and an alcohol or other Lewis base, complexes of magnesium chloride and an alcohol or other Lewis base, benzyl chloride, t-butyl chloride, benzyl bromide, t-butyl bromide, and triphenylcarbonium tetrakis(pentafluorophenyl)borate. These (c) components may be used alone or in combination of two or more.

In addition to the above-mentioned (a), (b), and (c) components, the polymerization initiator may, if necessary, be preliminarily prepared using 1,3-butadiene, which is also a monomer for polymerization. Further, a part or all of the (a) component or (c) component may be supported on an inert solid and used. The amount of each component can be appropriately set, but usually, the (a) component is 0.001 to 0.5 millimoles (mmol) per 100 g of monomer. The molar ratio of (b) component/(a) component is preferably 5 to 1,000, and the molar ratio of (c) component/(a) component is preferably 0.5 to 10.

The polymerization temperature in the coordination polymerization is preferably in the range of -80°C to 150°C, more preferably in the range of -20°C to 120°C. As the solvent used in the coordination polymerization, a hydrocarbon solvent inert to the reaction as exemplified in the above-mentioned anionic polymerization can be used, and the concentration of the monomer 1,3-butadiene in the reaction solution is the same as in the case of anionic polymerization. Furthermore, the reaction pressure in the coordination polymerization is also the same as in the case of anionic polymerization, and it is desirable that the raw materials used in the reaction are substantially free of reaction inhibitors such as water, oxygen, carbon dioxide, and protic compounds.

As the above-mentioned modified butadiene rubber, one obtained by anionic polymerization using an organic alkali metal compound, particularly alkyl lithium, is preferred.

The above-mentioned polybutadiene, in either case of anionic polymerization or coordination polymerization, can be subjected to a modification reaction between the polymerization active terminal after the polymerization reaction and the above-mentioned modifier to obtain modified butadiene rubber. The temperature of the modification reaction is preferably 20°C or higher, but the polymerization temperature of the polybutadiene can be used as is, and a range of 30°C to 120°C is more preferred. If the reaction temperature is too low, the viscosity of the polybutadiene tends to become excessively high or the dispersibility of the reactants tends to deteriorate. On the other hand, if the reaction temperature is too high, the polymerization active site tends to be easily deactivated. The amount of modifier used is preferably in the range of 0.25 to 3.0 mol per 1 mol of polymerization initiator used in the production of polybutadiene, and more preferably in the range of 0.5 to 1.5 mol.

### (Resin (B))

The rubber composition for a tire of the present embodiment preferably further contains a resin (B). By blending the resin (B) into the rubber composition, the elastic modulus of the rubber composition is improved, and both steering stability on dry road surfaces and wet gripping performance of a tire using the rubber composition can be achieved.

The content of the above-mentioned resin (B) is preferably 1 to 50 parts by mass, more preferably 5 to 30 parts by mass, with respect to 100 parts by mass of the above-mentioned rubber component (A). If the content of the resin (B) is 1 part by mass or more with respect to 100 parts by mass of the rubber component (A), the wet gripping performance of a tire using the rubber composition is further improved, and if it is 50 parts by mass or less, the decrease in elastic modulus of the rubber composition can be more easily suppressed. Therefore, when the content of the resin (B) is 1 to 50 parts by mass with respect to 100 parts by mass of the rubber component (A), the wet gripping performance of a tire using the rubber composition can be further improved.

As the above-mentioned resin (B), C₅-based resin, C₅/C₉-based resin, C₉-based resin, dicyclopentadiene resin, terpene phenol resin, terpene resin, rosin resin, and alkylphenol resin may be mentioned, and at least one selected from C₅-based resin, C₅/C₉-based resin, C₉-based resin, dicyclopentadiene resin, rosin resin, and alkylphenol resin is preferred. When the resin (B) contains at least one of C₅-based resin, C₅/C₉-based resin, C₉-based resin, dicyclopentadiene resin, terpene phenol resin, terpene resin, rosin resin, and alkylphenol resin, the wet gripping performance of a tire using the rubber composition can be further improved. The above-mentioned resin (B) may be used alone or in combination of two or more.

Among the above-mentioned resin (B), from the viewpoint of wet gripping performance of the tire, C₅-based resin, C₅/C₉-based resin, and C₉-based resin are particularly preferred. C5_{/}C9₋based resin and C₉-based resin have high compatibility with isoprene skeleton rubber (A1), and the effect of increasing the elastic modulus of the rubber composition in the low strain region and the effect of decreasing the elastic modulus of the rubber composition in the high strain region are further enhanced, so that the wet gripping performance of the tire can be further improved.

Furthermore, among the above-mentioned resin (B), from the viewpoint of reducing environmental impact, terpene resin and rosin resin are particularly preferred. Since terpene resin and rosin resin are sustainable resins of natural origin, environmental impact can be further reduced, and tire performance such as gripping performance on various road surface conditions including dry road surfaces, wet road surfaces, snow-covered road surfaces, and icy road surfaces can be further improved.

The above-mentioned resin (B) may have a functional group introduced by modification that interacts with fillers such as carbon black and silica. Examples of such functional groups include an amino group, amide group, isocyanate group, imino group, imidazole group, urea group, ammonium group, imide group, hydrazo group, azo group, diazo group, carboxyl group, nitrile group, pyridyl group, alkoxy group, hydroxyl group, oxy group, epoxy group, ether group, carbonyl group, oxycarbonyl group, silyl group, alkoxy silyl group, mercapto group, sulfide group, disulfide group, sulfonyl group, sulfinyl group, thiocarbonyl group, and the like.

The above-mentioned C₅-based resin refers to a C₅-based synthetic petroleum resin, and as such C₅-based resin, for example, an aliphatic petroleum resin obtained by polymerizing a C₅ fraction obtained by thermal cracking of naphtha in the petrochemical industry using a Friedel-Crafts catalyst such as AlCl₃ or BF₃ may be mentioned. The above-mentioned C₅ fraction usually contains olefinic hydrocarbons such as 1-pentene, 2-pentene, 2-methyl-1-butene, 2-methyl-2-butene, and 3-methyl-1-butene, and diolefinic hydrocarbons such as 2-methyl-1,3-butadiene, 1,2-pentadiene, 1,3-pentadiene, and 3-methyl-1,2-butadiene. The above-mentioned C₅-based resin may be a commercially available product, and examples include the "ESCOREZ^{®} (ESCOREZ is a registered trademark in Japan, other countries, or both) 1000 series" aliphatic petroleum resin manufactured by ExxonMobil Chemical Company, "Quintone^{®} (Quintone is a registered trademark in Japan, other countries, or both) 100 series" aliphatic petroleum resin manufactured by Zeon Corporation (specifically, A100, B170, M100, R100), and "T-REZ RA100" manufactured by Tonen Chemical Corporation.

The above-mentioned C₅/C₉-based resin refers to a C₅/C₉-based synthetic petroleum resin, and as such C₅/C₉-based resin, for example, a solid polymer obtained by polymerizing a C₅ fraction derived from petroleum and a C₉ fraction using a Friedel-Crafts catalyst such as AlCl₃ or BF₃ may be mentioned. More specifically, copolymers mainly composed of styrene, vinyltoluene, α-methylstyrene, indene, and the like may be mentioned. As the above-mentioned C₅/C₉-based resin, a resin with a low content of C₉ or higher components is preferred from the viewpoint of compatibility with the rubber component. Here, "low content of C₉ or higher components" means that the content of C₉ or higher components in the total resin is less than 50 mass%, preferably 40 mass% or less. The above-mentioned C₅/C₉-based resin may be a commercially available product, and examples include "Quintone^{®} G100B" (manufactured by Zeon Corporation), "ECR213" (manufactured by ExxonMobil Chemical Company), and "T-REZ RD104" (manufactured by Tonen Chemical Corporation).

The C₉-based resin is, for example, a resin in which aromatic compounds having 9 carbon atoms, with vinyl toluene, alkyl styrene, and indene as main monomers, are polymerized; it is a C₉ fraction that is obtained as a by-product together with basic petrochemical raw materials such as ethylene and propylene by thermal cracking of naphtha in the petrochemical industry. Here, specific examples of the C₉ fraction obtained by thermal cracking of naphtha include vinyl toluene, α-methylstyrene, β-methylstyrene, γ-methylstyrene, o-methylstyrene, p-methylstyrene, indene, and the like. The C₉-based resin may be obtained by copolymerizing, for example, using a Friedel-Crafts catalyst, a mixture of the C₉ fraction together with a C₈ fraction such as styrene, a C₁₀ fraction such as methylindene or 1,3-dimethylstyrene, and further naphthalene, vinylnaphthalene, vinyl anthracene, p-tert-butylstyrene, and the like as raw materials. The C₉-based resin may also be a modified petroleum resin modified with a compound having a hydroxyl group, an unsaturated carboxylic acid compound, or the like. The C₉-based resin can be a commercially available product; for example, as unmodified C₉-based petroleum resins, products such as "Nisseki Neopolymer^{®} (Nisseki Neopolymer is a registered trademark in Japan, other countries, or both) L-90," "Nisseki Neopolymer^{®} 120," "Nisseki Neopolymer^{®} 130," and "Nisseki Neopolymer^{®} 140" (manufactured by JX Nippon Oil & Energy Corporation) can be mentioned.

The dicyclopentadiene resin is a petroleum resin produced mainly from dicyclopentadiene, which is obtained by dimerizing cyclopentadiene. The dicyclopentadiene resin can be a commercially available product; for example, "Quintone^{®} 1000 Series" (product names "1105," "1325," "1340," etc.), which are cycloaliphatic petroleum resins manufactured by Zeon Corporation, can be mentioned.

The terpene phenol resin can be obtained, for example, by reacting terpenes and various phenols using a Friedel-Crafts catalyst, or further by condensing with formalin. There is no particular limitation on the terpenes used as raw materials, but monoterpene hydrocarbons such as α-pinene and limonene are preferred, those containing α-pinene are more preferred, and α-pinene is particularly preferred. The terpene phenol resin can be a commercially available product; for example, products such as "Tamanol 803L" and "Tamanol 901" (manufactured by Arakawa Chemical Industries, Ltd.), "YS Polyster^{®} (YS Polyster is a registered trademark in Japan, other countries, or both) U" series, "YS Polyster^{®} T" series, "YS Polyster^{®} S" series, "YS Polyster^{®} G" series, "YS Polyster^{®} N" series, "YS Polyster^{®} K" series, and "YS Polyster^{®} TH" series (manufactured by Yasuhara Chemical Co., Ltd.) can be mentioned.

The terpene resin is a solid resin obtained by compounding turpentine oil, which is obtained simultaneously with rosin from pine trees, or a polymerized component separated therefrom, and polymerizing using a Friedel-Crafts catalyst; examples include β-pinene resin and α-pinene resin. The terpene resin can be a commercially available product; for example, products such as the "YS" series (PX-1250, TR-105, etc.) and the "A" series (A115, S115, etc.) manufactured by Yasuhara Chemical Co., Ltd. can be mentioned.

The rosin resin is a natural resin mainly composed of rosin acids (abietic acid, palustric acid, isopimaric acid, etc.) and is the residue remaining after distilling turpentine essential oil from balsams such as pine resin (pine gum), which is the sap of Pinaceae plants, as well as modified resins and hydrogenated resins obtained by modifying or hydrogenating these. For example, natural resin rosin, its polymerized rosin or partially hydrogenated rosin; glycerin ester rosin, its partially hydrogenated rosin, fully hydrogenated rosin, or polymerized rosin; pentaerythritol ester rosin, its partially hydrogenated rosin or polymerized rosin, and the like can be mentioned. As natural resin rosin, gum rosin contained in raw pine gum or tall oil, tall oil rosin, wood rosin, and the like can be mentioned. The rosin resin can be a commercially available product; for example, products such as "NEOTALL 105" (manufactured by Harima Chemicals Group, Inc.), "SN Tack 754" (manufactured by San Nopco Limited), "Lime Resin No. 1," "PENSEL A," and "PENSEL AD" (manufactured by Arakawa Chemical Industries, Ltd.), "Poly-Pale" and "Pentalyn C" (manufactured by Eastman Chemical Company), and "Highrosin^{®} (Highrosin is a registered trademark in Japan, other countries, or both) S" (manufactured by Taishamatsu essential oil Co., Ltd.) can be mentioned.

The alkylphenol resin can be obtained, for example, by a condensation reaction of alkylphenol and formaldehyde in the presence of a catalyst. The alkylphenol resin can be a commercially available product; for example, products such as "Hitanol 1502P" (alkylphenol-formaldehyde resin, manufactured by Hitachi Chemical Co., Ltd.), "TACKIROL 201" (alkylphenol-formaldehyde resin, manufactured by Taoka Chemical Co., Ltd.), "TACKIROL 250-I" (brominated alkylphenol-formaldehyde resin, manufactured by Taoka Chemical Co., Ltd.), "TACKIROL 250-III" (brominated alkylphenol-formaldehyde resin, manufactured by Taoka Chemical Co., Ltd.), and "R7521P," "SP1068," "R7510PJ," "R7572P," and "R7578P" (manufactured by SI GROUP INC.) can be mentioned.

### - Hydrogenated Resin -

It is also preferable that the resin (B) is at least partially hydrogenated (that is, is a hydrogenated resin). By making the resin (B) at least partially hydrogenated, compatibility with the isoprene skeleton rubber (A1) is further improved, the mobility of the rubber component (A) is further controlled, and the hysteresis loss (tan δ) in the low temperature region can be further improved, so that the wet gripping performance of a tire using the rubber composition can be further enhanced.

The hydrogenated resin preferably has a softening point higher than 110°C and a weight-average molecular weight in terms of polystyrene of 200 to 1600 g/mol. By applying a rubber composition containing such a hydrogenated resin to a tire, the wear resistance performance of the tire can be further improved.

Here, the softening point of the hydrogenated resin is measured in accordance with JIS-K2207-1996 (ring and ball method).

Further, the weight-average molecular weight of the hydrogenated resin is measured by gel permeation chromatography (GPC), and the value in terms of polystyrene is calculated.

When the softening point of the hydrogenated resin is higher than 110°C, the tire to which the rubber composition is applied can be sufficiently reinforced, and the wear resistance performance can be further improved. From the viewpoint of wear resistance performance of the tire, the softening point of the hydrogenated resin is more preferably 116°C or higher, more preferably 120°C or higher, more preferably 123°C or higher, and still more preferably 127°C or higher. From the viewpoint of processability, the softening point of the hydrogenated resin is preferably 160°C or lower, more preferably 150°C or lower, more preferably 145°C or lower, more preferably 141°C or lower, and still more preferably 136°C or lower.

When the weight-average molecular weight of the hydrogenated resin in terms of polystyrene is 200 g/mol or more, the resin component is less likely to precipitate from the tire, and the effect of the hydrogenated resin can be sufficiently exhibited; when it is 1600 g/mol or less, the hydrogenated resin is easily compatible with the rubber component (A).

From the viewpoint of suppressing precipitation of the hydrogenated resin from the tire and suppressing deterioration of the tire appearance, the weight-average molecular weight of the hydrogenated resin in terms of polystyrene is preferably 500 g/mol or more, more preferably 550 g/mol or more, more preferably 600 g/mol or more, more preferably 650 g/mol or more, and still more preferably 700 g/mol or more. From the viewpoint of further improving the compatibility of the hydrogenated resin with the rubber component (A) and further enhancing the effect of the hydrogenated resin, the weight-average molecular weight of the hydrogenated resin in terms of polystyrene is more preferably 1570 g/mol or less, more preferably 1530 g/mol or less, more preferably 1500 g/mol or less, more preferably 1470 g/mol or less, more preferably 1430 g/mol or less, more preferably 1400 g/mol or less, more preferably 1370 g/mol or less, more preferably 1330 g/mol or less, more preferably 1300 g/mol or less, more preferably 1200 g/mol or less, more preferably 1100 g/mol or less, more preferably 1000 g/mol or less, and still more preferably 950 g/mol or less.

The ratio (Ts_{HR}/Mw_{HR}) of the softening point (Ts_{HR}) (unit: °C) of the hydrogenated resin to the weight-average molecular weight (Mw_{HR}) (unit: g/mol) in terms of polystyrene is preferably 0.07 or more, more preferably 0.083 or more, more preferably 0.095 or more, more preferably 0.104 or more, more preferably 0.125 or more, more preferably 0.135 or more, more preferably 0.14 or more, and still more preferably 0.141 or more. The ratio (Ts_{HR}/Mw_{HR}) is preferably 0.25 or less, preferably 0.24 or less, preferably 0.23 or less, preferably 0.19 or less, more preferably 0.18 or less, and still more preferably 0.17 or less.

The softening point and weight-average molecular weight in terms of polystyrene of the hydrogenated resin can be determined by the methods described in the examples below.

The above-mentioned resin that is at least partially hydrogenated refers to a resin obtained by reduction hydrogenation of a resin.

Examples of resins that serve as raw materials for the hydrogenated resin include the above-mentioned C₅-based resin, C₅/C₉-based resin, C₉-based resin, dicyclopentadiene resin, terpene phenol resin, terpene resin, rosin resin, and alkylphenol resin, and these resins may be used alone or in combination of two or more.

The resin serving as a raw material for the hydrogenated resin may include, for example, a resin obtained by copolymerizing a C₅ fraction and dicyclopentadiene (DCPD) (C₅/DCPD-based resin).

Here, when the content of dicyclopentadiene-derived components in the total amount of resin is 50 mass% or more, the C₅/DCPD-based resin is regarded as a dicyclopentadiene resin. When the content of dicyclopentadiene-derived components in the total amount of resin is less than 50 mass%, the C₅/DCPD-based resin is regarded as a C₅-based resin. The same applies even when a small amount of a third component or the like is included.

From the viewpoint of further improving the compatibility between the rubber component (A) and the resin (B), further improving the wet gripping performance of a tire using the rubber composition, and further reducing rolling resistance, it is preferable that the resin (B) is at least one selected from the group consisting of hydrogenated C₅-based resin, hydrogenated C₅/C₉-based resin, hydrogenated dicyclopentadiene resin (hydrogenated DCPD resin), and hydrogenated terpene resin; more preferably, at least one selected from the group consisting of hydrogenated C₅-based resin and hydrogenated C₅/C₉-based resin; and still more preferably, a hydrogenated C₅-based resin. It is also preferable that the resin has at least a hydrogenated DCPD structure or a hydrogenated cyclic structure in the monomer.

### (Silica)

The tire rubber composition of the present embodiment preferably contains silica. Examples of the silica include wet silica (hydrous silicate), dry silica (anhydrous silicate), calcium silicate, aluminum silicate, and the like; among these, wet silica is preferred because it has many silanol groups. These silicas may be used alone or in combination of two or more. The silica can be a commercially available product, and as commercial products of silica, products from Tosoh Silica Corporation, Evonik, Solvay, Solvay Japan, Tokuyama Corporation, and the like can be used.

From the viewpoint of reducing environmental impact, silica derived from plant-based silicate is preferred as the silica. Such plant-based silicate is present, for example, in plants such as bryophytes, ferns, horsetails, Cucurbitaceae, Urticaceae, and Poaceae. Among these plants, Poaceae plants are preferred. As Poaceae plants, rice, bamboo grass, sugarcane, and the like can be mentioned, and among these, rice is preferred. Since rice is widely cultivated for food, it can be procured locally in a wide area, and rice husks are generated in large quantities as industrial waste, making it easy to secure the quantity. Therefore, from the viewpoint of ease of procurement, silica derived from rice husks (hereinafter also referred to as "rice husk silica") is particularly preferred as the silica. By using rice husk silica, rice husks, which are industrial waste, can be effectively utilized, and since raw materials can be procured locally near the tire manufacturing plant, energy and cost for transportation and storage can be reduced, and from various viewpoints, it is preferable in terms of the environment. The rice husk silica may be a powder of rice husk charcoal obtained by carbonizing rice husks by heating, or may be precipitated silica produced by preparing an alkali silicate aqueous solution by extracting rice husk ash generated when rice husks are burned as fuel in a biomass boiler with alkali, and manufacturing by a wet process using the alkali silicate aqueous solution. The method for producing the rice husk charcoal is not particularly limited, and various known methods can be used; for example, rice husk charcoal can be obtained by pyrolyzing rice husks by steaming and roasting using a kiln. The rice husk charcoal thus obtained can be pulverized using a known pulverizer (for example, a ball mill), and by selecting and classifying to a predetermined particle size range, a powder of rice husk charcoal can be obtained. The rice husk-derived precipitated silica can be produced by a method described in JP 2019-38728 A or the like.

Further, from the viewpoint of reducing environmental impact, it is also preferable to use silica produced by extracting silicate components from silicon wafer scraps, which are raw materials for semiconductors, or from glass bottles and the like, and recycling them for use in manufacturing.

The silica preferably has a nitrogen adsorption specific surface area (N₂SA) of 50 m²/g or more, more preferably 100 m²/g or more, still more preferably 150 m²/g or more, and preferably 350 m²/g or less, more preferably 250 m²/g or less, still more preferably 230 m²/g or less, and even more preferably 200 m²/g or less.

In the present specification, the nitrogen adsorption specific surface area (N₂SA) of silica is a value measured by the BET method in accordance with ASTM D3037-93.

The content of the silica can be appropriately adjusted depending on, for example, the tire category to which it is applied, the tire member, target performance, and the like. For example, the content of silica is preferably 5 parts by mass or more, more preferably 10 parts by mass or more, more preferably 30 parts by mass or more, more preferably 50 parts by mass or more, more preferably 60 parts by mass or more, and preferably 300 parts by mass or less, more preferably 200 parts by mass or less, still more preferably 180 parts by mass or less, and particularly preferably 150 parts by mass or less, with respect to 100 parts by mass of the rubber component (A).

### (Silane Coupling Agent)

When the tire rubber composition of the present embodiment contains silica, it is preferable that the rubber composition contains a silane coupling agent in order to enhance the effect of the silica. Examples of the silane coupling agent include bis(3-triethoxysilylpropyl)tetrasulfide, bis(3-triethoxysilylpropyl)trisulfide, bis(3-triethoxysilylpropyl)disulfide, bis(2-triethoxysilylethyl)tetrasulfide, bis(3-trimethoxysilylpropyl)tetrasulfide, bis(2-trimethoxysilylethyl)tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyltetrasulfide, 3-triethoxysilylpropyl-N,N-dimethylthiocarbamoyltetrasulfide, 2-triethoxysilylethyl-N,N-dimethylthiocarbamoyltetrasulfide, 3-trimethoxysilylpropylbenzothiazolyltetrasulfide, 3-triethoxysilylpropylbenzothiazolyltetrasulfide, 3-triethoxysilylpropyl methacrylate monosulfide, 3-trimethoxysilylpropyl methacrylate monosulfide, bis(3-diethoxymethylsilylpropyl)tetrasulfide, 3-mercaptopropyldimethoxymethylsilane, dimethoxymethylsilylpropyl-N,N-dimethylthiocarbamoyltetrasulfide, dimethoxymethylsilylpropylbenzothiazolyltetrasulfide, and the like. The silane coupling agent can be a commercially available product; for example, products from Evonik, Momentive, Shin-Etsu Silicone, Dow Corning Toray Co., Ltd., Tokyo Chemical Industry Co., Ltd., Azumax Co., Ltd., and the like can be used as commercial products of the silane coupling agent. These silane coupling agents may be used alone or in combination of two or more.

The content of the silane coupling agent may be appropriately adjusted, for example, according to the target tire category, tire member, target performance, and the like. For example, the content of the silane coupling agent is preferably 1 part by mass or more, more preferably 6 parts by mass or more, still more preferably 8 parts by mass or more, and preferably 20 parts by mass or less, more preferably 15 parts by mass or less, still more preferably 12 parts by mass or less, and even more preferably 10 parts by mass or less, with respect to 100 parts by mass of the silica.

It should be noted that bioethanol may also be used as a raw material for the silane coupling agent. Bioethanol is produced mainly from saccharides and/or cellulose as biological resources, and other biological resources such as proteins, lipids, and amino acids cannot be effectively utilized. Furthermore, saccharides compete with food, and excessive use of cellulose leads to deforestation. Therefore, depending on the supply situation of various biological resources, the supply situation of recycled resources, the supply situation of fossil resources, and market demands (for example, demand for biomass resources as food), it is preferable to use a plurality of types of ethanol derived from biological resources (bioethanol) as raw materials for the silane coupling agent, or to use a combination of ethanol derived from biological resources (bioethanol), ethanol derived from recycled resources, and ethanol derived from fossil resources. In this way, it is possible to effectively utilize a wide range of biological resources such as saccharides, proteins, and lipids, as well as recycled resources, without relying on a single type of biological resource, and to take environmental considerations into account according to the manufacturing situation.

### (Carbon Black)

The rubber composition for a tire of the present embodiment preferably contains carbon black. As the carbon black, plant-derived carbon black and carbon black obtained by recycling are particularly preferred. Examples of plant-derived carbon black include those derived from castor oil and rosin oil. Examples of carbon black obtained by recycling include carbon black obtained by pyrolysis of used tires and the like, and carbon black obtained from waste oil. The grade of the carbon black is not particularly limited, and examples include N134, N110, N220, N234, N219, N339, N330, N326, N351, N550, N762, and the like. Commercially available products may be used as the carbon black, and examples of commercially available carbon black products include those from Asahi Carbon Co., Ltd., Cabot Japan K.K., Tokai Carbon Co., Ltd., Mitsubishi Chemical Corporation, Lion Corporation, Nippon Steel Carbon Co., Ltd., Birla Carbon, and the like. These carbon blacks may be used alone or in combination of two or more.

The nitrogen adsorption specific surface area (N₂SA) of the carbon black is not particularly limited and may be appropriately adjusted, for example, according to the target tire category, tire member, target performance, and the like. For example, the nitrogen adsorption specific surface area (N₂SA) of the carbon black is preferably 20 m²/g or more, more preferably 50 m²/g or more, still more preferably 70 m²/g or more, even more preferably 90 m²/g or more, and preferably 200 m²/g or less, more preferably 150 m²/g or less, and still more preferably 130 m²/g or less.

It should be noted that, in the present specification, the nitrogen adsorption specific surface area (N₂SA) of carbon black is determined according to JIS K 6217-2:2017 (ISO 4652:2012).

The content of the carbon black is not particularly limited and may be appropriately adjusted, for example, according to the target tire category, tire member, target performance, and the like. For example, the content of carbon black is preferably 1 part by mass or more, more preferably 3 parts by mass or more, and even more preferably 5 parts by mass or more, with respect to 100 parts by mass of the rubber component (A).

The proportion of silica in the total content of silica and carbon black is not particularly limited and may be appropriately adjusted, for example, according to the target tire category, tire member, target performance, and the like. For example, in the case of tread rubber for passenger vehicle tires, the proportion of silica in the total content of silica and carbon black is preferably 50 mass% or more, more preferably 70 mass% or more, still more preferably 80 mass% or more, even more preferably 90 mass% or more, and particularly preferably 95 mass% or more. The proportion of silica in the total content of silica and carbon black may be 100 mass%, but is preferably 98 mass% or less.

### (Rubber Powder)

The rubber composition for a tire of the present embodiment may contain rubber powder. The rubber powder may be obtained by pulverizing used rubber products such as used tires, and, if desired, removing reinforcing members such as steel materials and fibers, dust, glass, sand, stones, and the like, or by preparing a newly vulcanized rubber composition for the purpose of producing rubber powder and pulverizing it. For example, rubber powder can be obtained from vulcanized rubber by the method described in "Rubber Chemistry And Technology." In the process of obtaining rubber powder by pulverizing vulcanized rubber, mechanical treatment or low-temperature treatment may be used. For example, in mechanical treatment, various crushing devices such as cracker mills and granulators can be used to mechanically pulverize vulcanized rubber into fine particles. In low-temperature treatment, finely chopped vulcanized rubber is frozen at extremely low temperatures and then pulverized into fine particles. For removal of steel materials, magnetic separators and the like can be used, and for removal of fibers, air classifiers and the like can be used. Commercially available products may also be used as the rubber powder, and examples of commercially available rubber powder products include those from Global Corporation and Nantong Huili Rubber Corporation. From the viewpoint of reducing environmental impact, it is preferable to use rubber powder obtained by pulverizing used rubber products such as used tires. The rubber powder may be used alone or in combination of two or more types.

The composition of the rubber powder is not particularly limited and depends on the composition of the vulcanized rubber of the used rubber product (used tire) serving as the raw material. In one embodiment, the rubber powder contains a rubber component, carbon black, silica, and the like. The rubber component, carbon black, silica, and the like contained in the rubber powder may be the same as or different from the rubber component (A), carbon black, silica, and the like contained in the rubber composition of the present embodiment described above.

The rubber powder preferably has a volume-average particle diameter of 1000 µm or less, more preferably 500 µm or less, still more preferably 200 µm or less, and even more preferably 100 µm or less. The smaller the volume-average particle diameter of the rubber powder, the better, and the lower limit is not particularly limited.

It should be noted that, in the present specification, the volume-average particle diameter is measured using a laser diffraction particle size distribution measuring device, and, for example, can be measured using "CAPA500" manufactured by HORIBA, Ltd.

The rubber powder preferably has a 60-mesh sieve residue of less than 1 mass%, more preferably 0.5 mass% or less, still more preferably 0.1 mass% or less, and the lower limit is not particularly limited. The rubber powder preferably has an 80-mesh sieve residue of less than 10 mass%, more preferably 1 mass% or less, still more preferably 0.5 mass% or less, and the lower limit is not particularly limited.

It should be noted that, in the present specification, the sieve residue is measured according to ASTM D5644-01.

The rubber powder preferably has an acetone extract content of 12 mass% or less, more preferably 11 mass% or less, still more preferably 10 mass% or less, and preferably 1 mass% or more, more preferably 2 mass% or more, and still more preferably 3 mass% or more.

It should be noted that, in the present specification, the acetone extract content in the rubber powder refers to the acetone extract content (%) determined by the acetone extraction method in accordance with JIS K6350.

The content of the rubber powder is not particularly limited and may be appropriately adjusted, for example, according to the target tire category, tire member, target performance, and the like. For example, the content of rubber powder is preferably 1 part by mass or more, more preferably 2 parts by mass or more, still more preferably 3 parts by mass or more, and preferably 200 parts by mass or less, more preferably 150 parts by mass or less, still more preferably 100 parts by mass or less, more preferably 50 parts by mass or less, still more preferably 30 parts by mass or less, even more preferably 15 parts by mass or less, still more preferably 10 parts by mass or less, and particularly preferably 5 parts by mass or less, with respect to 100 parts by mass of the rubber component (A).

### (Liquid Softener)

The rubber composition for a tire of the present embodiment may contain a liquid softener. Here, "liquid softener" refers to a compounding agent that is liquid at 25°C (room temperature) and has the function of softening the rubber composition. The liquid softener is not particularly limited, and examples include oils, liquid polymers, and the like, with oils being preferred among these. These liquid softeners may be used alone or in combination of two or more.

The term "oil" is a general term for extender oil contained in the rubber component and liquid oil components added as compounding agents in the rubber composition, and examples include vegetable oils, process oils, oils obtained by recycling vegetable oils or process oils, and mixtures thereof. From the viewpoint of reducing environmental impact, vegetable oils and oils obtained by recycling are preferred as the oil. Examples of the vegetable oil include palm oil, castor oil, cottonseed oil, soybean oil, linseed oil, rapeseed oil, Cocos nucifera oil, peanut oil, pine oil, pine tar, tall oil, corn oil, rice bran oil, safflower oil, sesame oil, olive oil, sunflower oil, palm kernel oil, camellia oil, jojoba oil, macadamia nut oil, tung oil, coconut oil, and the like. Examples of the process oil include, for example, paraffin process oil, aromatic process oil, naphthenic process oil, and the like. Commercially available products may be used as the oil, and examples of commercially available oil products include those from Idemitsu Kosan Co., Ltd., SANKYO YUKA KOGYO K.K., ENEOS Corporation, Orisoy, H&R, Toyokuni Oil Co., Ltd., Nisshin OilliO Group, Ltd., and the like. These oils may be used alone or in combination of two or more.

As the liquid polymer, a liquid diene polymer is preferred. Examples of the liquid diene polymer include liquid styrene-butadiene copolymer (liquid SBR), liquid polybutadiene (liquid BR), liquid polyisoprene (liquid IR), liquid styrene-isoprene copolymer (liquid SIR), liquid styrene-butadiene-styrene block copolymer (liquid SBS block polymer), liquid styrene-isoprene-styrene block copolymer (liquid SIS block polymer), liquid polyfarnesene, liquid farnesene-butadiene copolymer, and the like. These liquid polymers may be hydrogenated, and the terminals or main chains may be modified with functional groups (polar groups). These liquid polymers may be used alone or in combination of two or more.

The content of the liquid softener is not particularly limited and may be appropriately adjusted, for example, according to the target tire category, tire member, target performance, and the like. For example, the content of the liquid softener is preferably 5 parts by mass or more, more preferably 10 parts by mass or more, and preferably 100 parts by mass or less, more preferably 70 parts by mass or less, still more preferably 50 parts by mass or less, and even more preferably 30 parts by mass or less, with respect to 100 parts by mass of the rubber component (A).

### (Antioxidant)

The rubber composition for a tire of the present embodiment may contain an antioxidant. Examples of the antioxidant include N-(1,3-dimethylbutyl)-N'-phenyl-p-phenylenediamine (6PPD), N,N'-bis(1,4-dimethylpentyl)-p-phenylenediamine (77PD), N,N'-diphenyl-p-phenylenediamine (DPPD), N,N'-bis(1-ethyl-3-methylpentyl)-p-phenylenediamine, 2,2,4-trimethyl-1,2-dihydroquinoline polymer (TMDQ), 6-ethoxy-2,2,4-trimethyl-1,2-dihydroquinoline (AW), 6-anilino-2,2,4-trimethyl-1,2-dihydroquinoline, and the like. Commercially available products may be used as the antioxidant, and examples of commercially available antioxidant products include those from Ouchi Shinko Chemical Industrial Co., Ltd., Sumitomo Chemical Co., Ltd., Seiko-Chemical Co., Ltd., Flexsys, and the like. These antioxidants may be used alone or in combination of two or more.

The content of the antioxidant is not particularly limited and may be appropriately adjusted, for example, according to the target tire category, tire member, target performance, and the like. For example, the content of the antioxidant is preferably 1 part by mass or more, more preferably 1.5 parts by mass or more, still more preferably 2 parts by mass or more, and preferably 12 parts by mass or less, more preferably 10 parts by mass or less, and still more preferably 8 parts by mass or less, with respect to 100 parts by mass of the rubber component (A).

### (Wax)

The rubber composition for a tire of the present embodiment may contain wax. Examples of the wax include natural waxes such as plant-based waxes and animal-based waxes; petroleum-based waxes such as paraffin wax and microcrystalline wax; synthetic waxes such as polymers of ethylene and polymers of propylene; and the like. Commercially available products may be used as the wax, and examples of commercially available wax products include those from Seiko-Chemical Co., Ltd., Nippon Seiro Co., Ltd., Ouchi Shinko Chemical Industrial Co., Ltd., and the like. These waxes may be used alone or in combination of two or more.

The content of the wax is not particularly limited and may be appropriately adjusted, for example, according to the target tire category, tire member, target performance, and the like. For example, the content of the wax is preferably 0.5 part by mass or more, more preferably 1 part by mass or more, and preferably 10 parts by mass or less, more preferably 6 parts by mass or less, with respect to 100 parts by mass of the rubber component (A).

### (Stearic Acid)

The rubber composition for a tire of the present embodiment may contain stearic acid. Commercially available products may be used as the stearic acid, and examples of commercially available stearic acid products include those from NOF Corporation, Kao Corporation, FUJIFILM Wako Pure Chemical Corporation, Chiba Fatty Acid Co., Ltd., and the like. These commercially available stearic acids may be used alone or in combination of two or more.

The content of the stearic acid is not particularly limited and may be appropriately adjusted, for example, according to the target tire category, tire member, target performance, and the like. For example, the content of the stearic acid is preferably 1 part by mass or more, more preferably 2 parts by mass or more, and preferably 10 parts by mass or less, more preferably 6 parts by mass or less, with respect to 100 parts by mass of the rubber component (A).

### (Zinc Oxide)

The rubber composition for a tire of the present embodiment may contain zinc oxide (zinc white). As the zinc oxide, not only zinc oxide obtained from zinc ingot but also zinc oxide obtained from recycled zinc or zinc dross (i.e., obtained by recycling) is preferred. Commercially available products may be used as the zinc oxide, and examples of commercially available zinc oxide products include those from Hakusui Tech Co., Ltd., Seido Chemical Industry Co., Ltd., Sakai Chemical Industry Co., Ltd., Mitsui Mining & Smelting Co., Ltd., Toho Zinc Co., Ltd., and the like. These commercially available zinc oxides may be used alone or in combination of two or more.

The content of the zinc oxide is not particularly limited and may be appropriately adjusted, for example, according to the target tire category, tire member, target performance, and the like. For example, the content of the zinc oxide is preferably 1 part by mass or more, more preferably 2 parts by mass or more, and preferably 10 parts by mass or less, more preferably 6 parts by mass or less, with respect to 100 parts by mass of the rubber component (A).

### (Sulfur)

The rubber composition for a tire of the present embodiment preferably contains sulfur. As the sulfur, those derived from fossil resources, those derived from recycled resources, and those obtained by processing biological resource-derived materials may be used, and from the viewpoint of reducing environmental impact, it is particularly preferable to use sulfur obtained from waste derived from biological resources. As a method for obtaining sulfur from waste derived from biological resources, for example, the method described in the above-mentioned Japanese Patent Application No. 2022-140390 may be used. As the sulfur, powdered sulfur, precipitated sulfur, colloidal sulfur, insoluble sulfur, highly dispersible sulfur, soluble sulfur, and the like, which are generally used as crosslinking agents in the rubber industry, may also be used. Commercially available products may be used as the sulfur, and examples of commercially available sulfur products include those from Tsurumi Chemical Industry Co., Ltd., Hosoi Chemical Industry Co., Ltd., Karuizawa Sulfur Co., Ltd., Shikoku Chemicals Corp., Flexsys, and the like. These sulfurs may be used alone or in combination of two or more.

The content of the sulfur is not particularly limited and may be appropriately adjusted, for example, according to the target tire category, tire member, target performance, and the like. For example, the content of the sulfur is preferably 0.3 part by mass or more, more preferably 0.5 part by mass or more, still more preferably 0.8 part by mass or more, and preferably 8 parts by mass or less, more preferably 5 parts by mass or less, with respect to 100 parts by mass of the rubber component (A).

### (Vulcanization Accelerator)

It is preferable that the rubber composition for a tire of the present embodiment contains a vulcanization accelerator. The vulcanization accelerator may be used regardless of whether it is derived from fossil resources, recycled resources, or biological resources, but from the viewpoint of reducing environmental impact, it is preferable that it is derived from biological resources. The vulcanization accelerator derived from biological resources can be obtained, for example, by the method disclosed in JP 2005-139239 A.

Examples of the vulcanization accelerator include sulfenamide vulcanization accelerators such as N-cyclohexyl-2-benzothiazolylsulfenamide (CBS), N,N-dicyclohexyl-2-benzothiazolylsulfenamide, N-tert-butyl-2-benzothiazolylsulfenamide (TBBS), N-oxyethylene-2-benzothiazolesulfenamide, and N,N'-diisopropyl-2-benzothiazolesulfenamide; guanidine vulcanization accelerators such as 1,3-diphenylguanidine (DPG), 1,3-di-o-tolylguanidine, and o-tolylbiguanidine; thiazole vulcanization accelerators such as 2-mercaptobenzothiazole (M) and di-2-benzothiazolyl disulfide (MBTS, DM); and thiuram vulcanization accelerators such as tetramethylthiuram disulfide (TMTD), tetrastearylthiuram disulfide, tetrabenzylthiuram disulfide (TBzTD), and tetrakis(2-ethylhexyl)thiuram disulfide (TOT-N). Commercially available products can be used as the vulcanization accelerator, and as such commercial products, products from Ouchi Shinko Chemical Industrial Co., Ltd., Sumitomo Chemical Co., Ltd., and the like can be used. These vulcanization accelerators may be used alone or in combination of two or more kinds.

The content of the vulcanization accelerator is not particularly limited and may be appropriately adjusted depending on, for example, the tire category to which it is applied, the tire member, target performance, and the like. For example, the content of the vulcanization accelerator is preferably 1 part by mass or more, more preferably 2 parts by mass or more, and still more preferably 3 parts by mass or more, and preferably 8 parts by mass or less, more preferably 6 parts by mass or less, and still more preferably 5.5 parts by mass or less, with respect to 100 parts by mass of the rubber component (A).

### (Cellulose Nanofiber)

The rubber composition for a tire of the present embodiment may contain cellulose nanofiber (CNF). By blending cellulose nanofiber into the rubber composition, the rubber composition can be reinforced. As the cellulose nanofiber, modified cellulose nanofiber is preferable, and the modified cellulose nanofiber is a fine fiber made from modified cellulose as a raw material. The fiber diameter of the cellulose nanofiber is not particularly limited, but is about 3 to 500 nm. The average fiber diameter and average fiber length of the cellulose nanofiber can be obtained by averaging the fiber diameters and fiber lengths obtained by observing each fiber using a scanning electron microscope (SEM), atomic force microscope (AFM), or transmission electron microscope (TEM). The cellulose nanofiber can be obtained by fibrillating cellulose. Further, the average fiber length and average fiber diameter of the fine fibers can be adjusted by oxidation treatment and fibrillation treatment.

The raw material for the cellulose nanofiber only needs to contain cellulose and is not particularly limited, but examples include plants (for example, wood, bamboo, hemp, jute, kenaf, agricultural residues, cloth, pulp (unbleached softwood kraft pulp (NUKP), bleached softwood kraft pulp (NBKP), unbleached hardwood kraft pulp (LUKP), bleached hardwood kraft pulp (LBKP), bleached kraft pulp (BKP), unbleached softwood sulfite pulp (NUSP), bleached softwood sulfite pulp (NBSP), thermomechanical pulp (TMP), recycled pulp, waste paper, etc.)), animals (for example, tunicates), algae, microorganisms (for example, acetic acid bacteria (Acetobacter)), and microbial products. These cellulose raw materials may be used alone or in combination of two or more kinds.

The content of the cellulose nanofiber is not particularly limited and may be appropriately adjusted depending on, for example, the tire category to which it is applied, the tire member, target performance, and the like. For example, the content of the cellulose nanofiber is preferably in the range of 1 to 100 parts by mass, more preferably in the range of 5 to 70 parts by mass, and still more preferably in the range of 10 to 40 parts by mass, with respect to 100 parts by mass of the rubber component (A).

### (Porous Cellulose Particles)

The rubber composition for a tire of the present embodiment may contain porous cellulose particles. The porous cellulose particles preferably have a porous structure with a porosity of 75 to 95%, and by blending them into the rubber composition, on-ice performance can be improved. When the porosity of the porous cellulose particles is 75% or more, the effect of improving on-ice performance is excellent, and when the porosity is 95% or less, the strength of the particles can be increased. The porosity is more preferably 80 to 90%. The porosity of the porous cellulose particles can be determined by measuring the volume of a certain mass of a sample (i.e., the porous cellulose particles) with a graduated cylinder, determining the bulk specific gravity, and calculating according to the following formula: 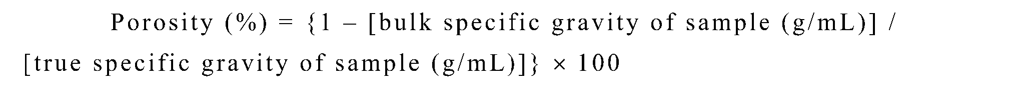 Porosity (%) = {1 - [bulk specific gravity of sample (g/mL)] / [true specific gravity of sample (g/mL)]} × 100

Here, the true specific gravity of cellulose is 1.5.

The particle size of the porous cellulose particles is not particularly limited, but from the viewpoint of wear resistance, those having an average particle size of 1000 µm or less are preferable. The lower limit of the average particle size is not particularly limited, but is preferably 5 µm or more. The average particle size is more preferably 100 to 800 µm, and still more preferably 200 to 800 µm.

As the porous cellulose particles, spherical particles having a long diameter/short diameter ratio of 1 to 2 are preferable. By using such spherical particles, dispersibility in the rubber composition is improved, which can contribute to improvement in on-ice performance and maintenance of wear resistance and the like. The long diameter/short diameter ratio is more preferably 1.0 to 1.5.

The average particle size and long diameter/short diameter ratio of the porous cellulose particles are determined as follows. That is, images are obtained by observing the porous cellulose particles with a microscope, and using these images, the long diameter and short diameter (if the long diameter and short diameter are the same, the length in one axial direction and the length in the axial direction perpendicular thereto) of 100 particles are measured, and the average value is calculated to obtain the average particle size, and the average value of the ratio of the long diameter to the short diameter is calculated to obtain the long diameter/short diameter ratio.

As the porous cellulose particles, those commercially available from Rengo Co., Ltd. under the trade name "Viscopearl," and those described in JP 2001-323095 A, JP 2004-115284 A, and the like can be suitably used.

The content of the porous cellulose particles is not particularly limited and may be appropriately adjusted depending on, for example, the tire category to which it is applied, the tire member, target performance, and the like. For example, the content of the porous cellulose particles is preferably in the range of 0.3 to 20 parts by mass, more preferably in the range of 1 to 15 parts by mass, and still more preferably in the range of 3 to 15 parts by mass, with respect to 100 parts by mass of the rubber component (A).

### (Solid Fine Particles)

The rubber composition for a tire of the present embodiment may contain solid fine particles. By blending the solid fine particles into the rubber composition, on-ice performance can be improved. The solid fine particles preferably have an average particle diameter of 1 µm or more, more preferably 1000 µm or less, and still more preferably 300 µm or less. Examples of the solid fine particles include plant-derived powders obtained from plants such as rice husks, walnut powder, or walnut shells; animal-derived powders obtained from animals such as eggshell (eggshell powder) and bone powder; natural mineral-derived powders such as shirasu; inorganic fine particles such as graphite and zinc oxide whiskers; water-soluble metal salt fine particles such as magnesium sulfate and metal salts of lignin sulfonic acid; non-metal fibers such as glass fiber; and the like. Among these, rice husks, walnut shells, eggshells, and shirasu are preferable.

The content of the solid fine particles is not particularly limited and may be appropriately adjusted depending on, for example, the tire category to which it is applied, the tire member, target performance, and the like. For example, the content of the solid fine particles is preferably in the range of 0.3 to 20 parts by mass, more preferably in the range of 1 to 15 parts by mass, and still more preferably in the range of 3 to 15 parts by mass, with respect to 100 parts by mass of the rubber component (A).

### (Others)

The rubber composition for a tire of the present embodiment may further contain, in addition to the above components, various additives generally used in the tire industry, such as fillers including calcium carbonate, talc, alumina, clay, aluminum hydroxide, mica, and the like; organic peroxides; and so on. The content of these additives is not particularly limited and may be appropriately adjusted depending on, for example, the tire category to which it is applied, the tire member, target performance, and the like. For example, the content is preferably in the range of 0.1 to 200 parts by mass with respect to 100 parts by mass of the rubber component (A).

### (Method for Producing Rubber Composition)

The method for producing the rubber composition for a tire of the present embodiment is not particularly limited, but for example, it can be produced by blending various components appropriately selected as necessary into the rubber component (A), followed by kneading, warming, extrusion, and the like. Further, by vulcanizing the obtained rubber composition, a vulcanized rubber can be obtained.

The kneading conditions are not particularly limited, and various conditions such as the input volume of the kneading apparatus, the rotational velocity of the rotor, ram pressure, kneading temperature, kneading time, and the type of kneading apparatus can be appropriately selected according to the purpose. Examples of the kneading apparatus include, in general, Banbury mixers, intermixers, kneaders, rolls, and the like, which are used for kneading rubber compositions.

The conditions for warming are also not particularly limited, and various conditions such as warming temperature, warming time, and warming apparatus can be appropriately selected according to the purpose. As the warming apparatus, warming roll machines and the like, which are generally used for warming rubber compositions, can be mentioned.

The conditions for extrusion are also not particularly limited, and various conditions such as extrusion time, extrusion speed, extrusion apparatus, extrusion temperature, and the like can be appropriately selected according to the purpose. As the extrusion apparatus, extruders and the like, which are generally used for extruding rubber compositions, can be mentioned. The extrusion temperature can be appropriately determined.

The apparatus, method, and conditions for vulcanization are also not particularly limited and can be appropriately selected according to the purpose. As the apparatus for vulcanization, molding vulcanizers using molds and the like, which are generally used for vulcanizing rubber compositions, can be mentioned. As for the vulcanization conditions, the temperature is, for example, about 100°C to 190°C.

### (Applications)

The rubber composition for a tire of the present embodiment can be applied to various constituent members of a tire, for example, tread (cap tread, base tread, under tread), cushion rubber, shoulder, sidewall, clinch, bead filler, coating rubber for carcass, insulation, chafer, inner liner, and the like, and can also be used for side reinforcing layers of run flat tires and the like.

### <Tread Rubber>

The tread rubber of the present embodiment is characterized by being composed of the above-described rubber composition for a tire.

Since the tread rubber of the present embodiment is composed of the above-described rubber composition for a tire, the ratio of sustainable materials is high, and when considering the entire process of production, use, and disposal of synthetic rubber, reduction of environmental impact can be promoted. Therefore, by applying the tread rubber of the present embodiment to a tire, it becomes possible to improve the ratio of sustainable materials in the tire, and, when considering the entire process of production, use, and disposal of synthetic rubber, reduction of environmental impact can be promoted.

The tread rubber of the present embodiment may be applied to new tires or to retreaded tires.

Further, the tread rubber of the present embodiment may be applied to pneumatic tires or to non-pneumatic tires.

### <Tire>

The tire of the present embodiment is characterized by comprising the above-described tread rubber.

Since the tire of the present embodiment comprises the above-described tread rubber, the ratio of sustainable materials is improved, and, when considering the entire process of production, use, and disposal of synthetic rubber, reduction of environmental impact can be promoted. Furthermore, the tire of the present embodiment does not impair performance.

Next, an embodiment of the tire of the present disclosure will be described in detail with reference to the drawings.

FIG. 1 is a cross-sectional view of an embodiment of the tire of the present disclosure. The tire 1 of the present embodiment illustrated in FIG. 1 includes a pair of bead portions 2, a pair of sidewall portions 3, and a tread portion 4 connected to both sidewall portions 3, and comprises a carcass 5 extending toroidally between the pair of bead portions 2 to reinforce each of these portions 2, 3, and 4, and a belt 6 disposed on the tire radial direction outer side of the crown portion of the carcass 5.

The carcass 5 of the tire 1 illustrated in FIG. 1 is composed of a single carcass ply formed by covering a plurality of cords arranged in parallel with coating rubber, and the carcass 5 includes a main body portion extending toroidally between bead cores 7 embedded in the bead portions 2, and a turn-up portion wound up radially outward from the inner side to the outer side in the tire width direction around each bead core 7. However, in the tire of the present disclosure, the number of plies and structure of the carcass 5 are not limited thereto.

Further, the belt 6 of the tire 1 illustrated in FIG. 1 is composed of two belt layers 6A and 6B, but in the tire of the present disclosure, the number of belt layers constituting the belt 6 is not limited thereto, and the number of belt layers may be three or more. Here, the belt layers 6A and 6B are generally rubberized layers of cords (preferably steel cords) extending obliquely with respect to the tire equator, and the two belt layers 6A and 6B are laminated so that the cords constituting the belt layers 6A and 6B cross each other across the tire equator to constitute the belt 6.

The tire 1 of the present embodiment is provided with tread rubber 8 on the outermost surface of the tread portion 4, and the above-described rubber composition for a tire of the present embodiment is used for the tread rubber 8. Therefore, the tire 1 of the present embodiment has an improved ratio of sustainable materials.

Note that the tire of the present disclosure only needs to be provided with tread rubber composed of the above-described rubber composition for a tire of the present embodiment, and various modifications can be made. For example, a belt reinforcement layer may be disposed on the tire radial direction outer side of the belt 6 of the tire 1 illustrated in FIG. 1, or the tread rubber 8 may be divided into cap rubber positioned on the outermost surface side and base rubber positioned on the tire radial direction inner side.

The tire of the present embodiment can be produced by using the above-described rubber composition as tread rubber by a conventional method. For example, the tire of the present embodiment may be obtained by molding using an unvulcanized rubber composition and then vulcanizing according to the type of tire to be applied, or by molding using a semi-vulcanized rubber that has undergone a preliminary vulcanization step and then further vulcanizing. Note that the tire of the present embodiment is preferably a pneumatic tire, and as the gas to be filled in the pneumatic tire, in addition to ordinary air or air with adjusted oxygen partial pressure, inert gases such as nitrogen, argon, and helium can be used.

### EXAMPLES

Hereinafter, the present disclosure will be described in more detail by way of examples, but the present disclosure is not limited to the following examples in any way.

### <Preparation and Evaluation of Rubber Compositions>

Each rubber composition was produced by a conventional method according to the formulation shown in Table 1.

The parts by mass of each compounding agent are all described so as to have two significant digits.

### (1) Ratio of Sustainable Materials

For each obtained rubber composition, the total mass ratio of materials derived from biological resources (biomass resources) and materials derived from recycled resources was calculated to determine the ratio of sustainable materials.

The results are presented in Table 1. The larger the value, the more excellent the effect.

### (2) Tire Performance

Low fuel efficiency and wet gripping performance were evaluated by the following methods.

### (2-1) Low Fuel Efficiency

The loss tangent (tan δ) of a vulcanized rubber test piece prepared from the rubber composition was measured under conditions of a temperature of 50°C, strain of 1%, and frequency of 15 Hz using a viscoelasticity meter (manufactured by GABO).

### (2-2) Wet Gripping Performance

The loss tangent (tan δ) of a vulcanized rubber test piece prepared from the rubber composition was measured under conditions of a temperature of -5°C, strain of 1%, and frequency of 15 Hz using a viscoelasticity meter (manufactured by GABO).

As a result of the evaluation by the above methods, low fuel efficiency and wet gripping performance were equivalent in Comparative Example 1 and Example 1.

**[Table 1]**

| | | | | Comparative Example 1 | Example 1 |
|---|---|---|---|---|---|
| Formulation | Rubber component | NR *1 | Parts by mass | 41 | 41 |
| | | SBR-1 *2 | | 31 | - |
| | | SBR-2 *3 | | 31 | 31 |
| | | SBR-3 *4 | | - | 31 |
| | Carbon black *5 | | | 5 | 5 |
| | Silica *6 | | | 65 | 65 |
| | Resin *7 | | | 6 | 6 |
| | Other chemicals *8 | | | 39 | 39 |
| Evaluation | Total parts by mass | | Parts by mass | 218 | 218 |
| | Sustainable material parts by mass | | Parts by mass | 41 | 72 |
| | Sustainable material ratio | | Mass % | 19 | 33 |

| | | | | | |
|---|---|---|---|---|---|
| *1 NR: natural rubber *2 SBR-1: hydroxycarbyloxy silane compound-modified styrene-butadiene rubber synthesized by the method described below *3 SBR-2: modified styrene-butadiene rubber having nitrogen and an alkoxysilyl group, containing 10.0 parts by mass of oil component per 100 parts by mass of rubber component, weight-average molecular weight (Mw) = 85.2 × 10⁴ *4 SBR-3: modified styrene-butadiene rubber supplied by a mass balance approach as in SBR-1, synthetic rubber certified by ISCC PLUS as being derived from bio-based raw materials and/or circular raw materials by a mass balance approach, with the ratio of sustainable materials being 100 mass%, corresponding to sustainable materials *5 Carbon black: manufactured by Tokai Carbon Co., Ltd., trade name "SEAST 7HM" *6 Silica: manufactured by Tosoh Silica Corporation, trade name "Nipsil AQ" *7 Resin: C₅/C₉-based resin, manufactured by Tonen Chemical Corporation, trade name "T-REZ RD104" *8 Other chemicals: total amount of sulfur, vulcanization accelerator, zinc oxide, stearic acid, operability improver, antioxidant, wax, silane coupling agent, aluminum hydroxide, and retarder. In Comparative Example 1 and Example 1, all were blended in the same parts by mass. | | | | | |

### <Synthesis method of SBR-1 (*2)>

In an 800 mL pressure-resistant glass vessel that had been dried and purged with nitrogen, a cyclohexane solution of 1,3-butadiene and a cyclohexane solution of styrene were added so as to provide 67.5 g of 1,3-butadiene and 7.5 g of styrene, and 0.6 mmol of 2,2-di-tetrahydrofurylpropane was added, followed by addition of 0.8 mmol of n-butyl lithium, and polymerization was carried out at 50°C for 1.5 hours. To the polymerization reaction system, in which the polymerization conversion rate at this time was nearly 100%, 0.72 mmol of N,N-bis(trimethylsilyl)-3-[diethoxy(methyl)silyl]propylamine was added as a modifier, and a modification reaction was conducted at 50°C for 30 minutes. Thereafter, 2 mL of a 5 mass% solution of 2,6-di-t-butyl-p-cresol (BHT) in isopropanol was added to terminate the reaction, and the modified SBR was obtained by drying in accordance with conventional methods.

As a result of measuring the microstructure of the obtained modified SBR, the bound styrene content was 10 mass%, and the glass transition temperature (Tg) was -65°C.

From Table 1, it can be understood that the rubber composition of the example according to the present disclosure contains synthetic rubber supplied by a mass balance approach, thereby improving the ratio of sustainable materials, and that, by applying it to a tire, the ratio of sustainable materials in the tire can be improved.

### REFERENCE SIGNS LIST

1: tire
2: bead portion
3: sidewall portion
4: tread portion
5: carcass
6: belt
6A, 6B: belt layer
7: bead core
8: tread rubber

## Claims

1. A rubber composition for a tire comprising a rubber component (A) including isoprene skeleton rubber (A1) and synthetic rubber (A2), wherein
content of the isoprene skeleton rubber (A1) is 10 parts by mass to 90 parts by mass and content of the synthetic rubber (A2) is 90 parts by mass to 10 parts by mass in 100 parts by mass of the rubber component (A), and
the synthetic rubber (A2) includes synthetic rubber (A2-1) supplied according to a mass balance approach.

2. The rubber composition for a tire according to claim 1, wherein the synthetic rubber (A2) includes synthetic rubber derived from at least one type of plant-derived raw material, plant-derived by-product, raw material obtained by recycling a plant-derived material, or raw material obtained by recycling a fossil resource-derived material.

3. The rubber composition for a tire according to claim 1, wherein the synthetic rubber (A2) includes 0.1 mass% to 99 mass% of synthetic rubber derived from a biological resource and 99.9 mass% to 1 mass% of synthetic rubber derived from a fossil resource.

4. The rubber composition for a tire according to claim 1, further comprising a resin (B).

5. The rubber composition for a tire according to claim 4, wherein content of the resin (B) is 1 part by mass to 50 parts by mass with respect to 100 parts by mass of the rubber component (A).

6. Tread rubber comprising the rubber composition for a tire according to any one of claims 1 to 5.

7. A tire comprising the tread rubber according to claim 6.
